# EUROPEAN PATENT SPECIFICATION

(11) **EP 4 316 056 B1**
(45) Date of publication and mention of the grant of the patent: **26.03.2025**
(21) Application number: 22710914.7
(22) Date of filing: 02.02.2022
(51) Int. Cl.: G01S 5/00, G01S 5/02

(54) **SIGNALING DETAILS FOR BATCH REPORTING OF POSITIONING MEASUREMENTS**
SIGNALISIERUNG VON DETAILS EINER STAPELMELDUNG VON POSITIONIERUNGSMESSUNGEN
DÉTAILS DE SIGNALISATION POUR L'ENVOI D'UN RAPPORT DE MESURES DE POSITIONNEMENT PAR LOTS

(30) Priority: 02.04.2021 GR 20210100226
(43) Date of publication of application: 07.02.2024
(73) Proprietor: QUALCOMM INCORPORATED, San Diego, California 92121-1714 (US)
(72) Inventor: MANOLAKOS, Alexandros, San Diego, California 92121-1714 (US); AKKARAKARAN, Sony, San Diego, California 92121-1714 (US); OPSHAUG, Guttorm Ringstad, San Diego, California 92121-1714 (US)
(74) Representative: Reddie & Grose LLP
(86) International application number: PCT/US2022/070470
(87) International publication number: WO 2022/212972

(56) References cited:
- QUALCOMM INCORPORATED: "Enhancements on Timing Error Mitigations for improved Accuracy", vol. RAN WG1, no. e-Meeting; 20210125 - 20210205, 19 January 2021 (2021-01-19), XP051971633, Retrieved from the Internet <URL:https://ftp.3gpp.org/tsg_ran/WG1_RL1/TSGR1_104-e/Docs/R1-2101468.zip R1-2101468.docx> [retrieved on 20210119]
- CATT [RAN1]: "[DRAFT] LS on UE/TRP Tx/Rx Timing Errors", vol. RAN WG1, no. e-meeting; 20210125 - 20210205, 8 February 2021 (2021-02-08), XP051977763, Retrieved from the Internet <URL:https://ftp.3gpp.org/tsg_ran/WG1_RL1/TSGR1_104-e/Docs/R1-2102201.zip R1-2102201 [DRAFT] LS on Rx and Tx timing errors.docx> [retrieved on 20210208]
- ERICSSON: "Techniques mitigating UE Rx/Tx timing delays", vol. RAN WG1, no. e-Meeting; 20210125 - 20210205, 19 January 2021 (2021-01-19), XP051971905, Retrieved from the Internet <URL:https://ftp.3gpp.org/tsg_ran/WG1_RL1/TSGR1_104-e/Docs/R1-2101754.zip R1-2101754.docx> [retrieved on 20210119]
- QUALCOMM INCORPORATED: "Enhancements on Timing Error Mitigations for improved Accuracy", vol. RAN WG1, no. e-Meeting; 20210510 - 20210527, 12 May 2021 (2021-05-12), XP052010922, Retrieved from the Internet <URL:https://ftp.3gpp.org/tsg_ran/WG1_RL1/TSGR1_105-e/Docs/R1-2104671.zip R1-2104671.docx> [retrieved on 20210512]
- QUALCOMM INCORPORATED: "Remaining Issues on Timing Error Mitigations for improved Accuracy", vol. RAN WG1, no. e-Meeting; 20211011 - 20211019, 2 October 2021 (2021-10-02), XP052059123, Retrieved from the Internet <URL:https://ftp.3gpp.org/tsg_ran/WG1_RL1/TSGR1_106b-e/Docs/R1-2110187.zip R1-2110187.docx> [retrieved on 20211002]
- QUALCOMM INCORPORATED: "Discussion on Positioning Enhancements UE Features", vol. RAN WG1, no. e-Meeting; 20211111 - 20211119, 6 November 2021 (2021-11-06), XP052075355, Retrieved from the Internet <URL:https://ftp.3gpp.org/tsg_ran/WG1_RL1/TSGR1_107-e/Docs/R1-2112250.zip R1-2112250.docx> [retrieved on 20211106]

## Description

.

### BACKGROUND OF THE DISCLOSURE

### 1. Field of the Disclosure

Aspects of the disclosure relate generally to wireless positioning.

### 2. Description of the Related Art

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service and a fourth-generation (4G) service (e.g., Long Term Evolution (LTE) or WiMax). There are presently many different types of wireless communication systems in use, including cellular and personal communications service (PCS) systems. Examples of known cellular systems include the cellular analog advanced mobile phone system (AMPS), and digital cellular systems based on code division multiple access (CDMA), frequency division multiple access (FDMA), time division multiple access (TDMA), the Global System for Mobile communications (GSM), etc.

A fifth generation (5G) wireless standard, referred to as New Radio (NR), calls for higher data transfer speeds, greater numbers of connections, and better coverage, among other improvements. The 5G standard, according to the Next Generation Mobile Networks Alliance, is designed to provide data rates of several tens of megabits per second to each of tens of thousands of users, with 1 gigabit per second to tens of workers on an office floor. Several hundreds of thousands of simultaneous connections should be supported in order to support large sensor deployments. Consequently, the spectral efficiency of 5G mobile communications should be significantly enhanced compared to the current 4G standard. Furthermore, signaling efficiencies should be enhanced and latency should be substantially reduced compared to current standards. Qualcomm Incorporated: "Enhancements on Timing Error Mitigations for Improved Accuracy", R1-2101468 discusses supporting UE and gNB reporting enhancements for the purpose of providing information, to the entity performing the positioning calculation, related to which measurements can be assumed to have a same Tx, or Rx, or Rx-Tx timing error. For example, a UE may report which measurements are associated with a a common Timing Group, e.g., if the UE can guarantee that 2 measurements are performed using the same panel in FR2 on close-by PRS resources, it may be able to inform the LMF that these 2 measurements have the same Rx timing error (where the "same" can be interpreted in the specification as having a timing error smaller than a threshold). In such a scenario, the LMF could use this "side information" to enhance the performance, by, e.g., subtracting the measurements to create differential measurements and removing the common (and unknown) bias that the measurements contain. CATT [RAN1]: "[DRAFT] LS on UE/TRP Tx/Rx Timing Errors"; R1-2102201 discusses definitions of UE/TRP Tx/Rx timing errors and UE/TRP Tx/Rx/RxTx timing error groups in RAN1#104e. UE Tx 'timing error group' (UE Tx TEG): A UE Tx TEG is associated with the transmissions of one or more UL SRS resources for the positioning purpose, which have the Tx timing errors within a certain margin. TRP Tx 'timing error group' (TRP Tx TEG): A TRP Tx TEG is associated with the transmissions of one or more DL PRS resources, which have the Tx timing errors within a certain margin.

### SUMMARY

The invention is set out in the independent claims, to which attention is directed. Further advantageous embodiments are set out in the dependent claims.

### BRIEF DESCRIPTION OF THE DRAWINGS

The accompanying drawings are presented to aid in the description of various aspects of the disclosure and are provided solely for illustration of the aspects and not limitation thereof.
FIG. 1 illustrates an example wireless communications system, according to aspects of the disclosure.
FIGS. 2A and 2B illustrate example wireless network structures, according to aspects of the disclosure.
FIGS. 3A to 3C are simplified block diagrams of several sample aspects of components that may be employed in a user equipment (UE), a base station, and a network entity, respectively, and configured to support communications as taught herein.
FIGS. 4A to 4D are diagrams illustrating example frame structures and channels within the frame structures, according to aspects of the disclosure.
FIG. 5 illustrates an example Long-Term Evolution (LTE) positioning protocol (LPP) call flow between a UE and a location server for performing positioning operations.
FIG. 6 illustrates an example batch measurement report structure for positioning measurements, according to aspects of the disclosure.
FIG. 7 is a diagram illustrating an example timeline for measurement reporting, according to aspects of the disclosure.
FIGS. 8 and 9 illustrate example methods of wireless positioning, according to aspects of the disclosure.
FIGS. 10 and 11 illustrate example methods of communication, according to aspects of the disclosure.

### DETAILED DESCRIPTION

Aspects of the disclosure are provided in the following description and related drawings directed to various examples provided for illustration purposes. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" are not intended to be specific or otherwise limited to any particular radio access technology (RAT), unless otherwise noted. In general, a UE may be any wireless communication device (e.g., a mobile phone, router, tablet computer, laptop computer, consumer asset locating device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a radio access network (RAN). As used herein, the term "UE" may be referred to interchangeably as an "access terminal" or "AT," a "client device," a "wireless device," a "subscriber device," a "subscriber terminal," a "subscriber station," a "user terminal" or "UT," a "mobile device," a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on the Institute of Electrical and Electronics Engineers (IEEE) 802.11 specification, etc.) and so on.

A base station may operate according to one of several RATs in communication with UEs depending on the network in which it is deployed, and may be alternatively referred to as an access point (AP), a network node, a NodeB, an evolved NodeB (eNB), a next generation eNB (ng-eNB), a New Radio (NR) Node B (also referred to as a gNB or gNodeB), etc. A base station may be used primarily to support wireless access by UEs, including supporting data, voice, and/or signaling connections for the supported UEs. In some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an uplink / reverse or downlink / forward traffic channel.

The term "base station" may refer to a single physical transmission-reception point (TRP) or to multiple physical TRPs that may or may not be co-located. For example, where the term "base station" refers to a single physical TRP, the physical TRP may be an antenna of the base station corresponding to a cell (or several cell sectors) of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference radio frequency (RF) signals the UE is measuring. Because a TRP is the point from which a base station transmits and receives wireless signals, as used herein, references to transmission from or reception at a base station are to be understood as referring to a particular TRP of the base station.

In some implementations that support positioning of UEs, a base station may not support wireless access by UEs (e.g., may not support data, voice, and/or signaling connections for UEs), but may instead transmit reference signals to UEs to be measured by the UEs, and/or may receive and measure signals transmitted by the UEs. Such a base station may be referred to as a positioning beacon (e.g., when transmitting signals to UEs) and/or as a location measurement unit (e.g., when receiving and measuring signals from UEs).

An "RF signal" comprises an electromagnetic wave of a given frequency that transports information through the space between a transmitter and a receiver. As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal.

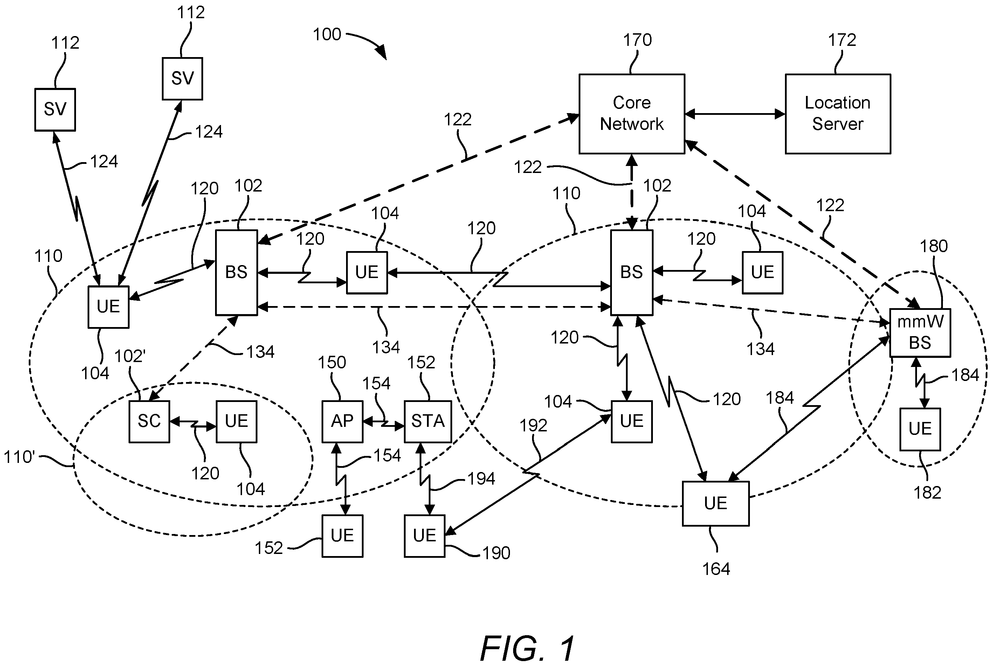

**FIG. 1** illustrates an example wireless communications system 100, according to aspects of the disclosure. The wireless communications system 100 (which may also be referred to as a wireless wide area network (WWAN)) may include various base stations 102 (labeled "BS") and various UEs 104. The base stations 102 may include macro cell base stations (high power cellular base stations) and/or small cell base stations (low power cellular base stations). In an aspect, the macro cell base station may include eNBs and/or ng-eNBs where the wireless communications system 100 corresponds to an LTE network, or gNBs where the wireless communications system 100 corresponds to a NR network, or a combination of both, and the small cell base stations may include femtocells, picocells, microcells, etc.

The base stations 102 may collectively form a RAN and interface with a core network 170 (e.g., an evolved packet core (EPC) or a 5G core (5GC)) through backhaul links 122, and through the core network 170 to one or more location servers 172 (e.g., a location management function (LMF) or a secure user plane location (SUPL) location platform (SLP)). The location server(s) 172 may be part of core network 170 or may be external to core network 170. In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / 5GC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each geographic coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCI), a virtual cell identifier (VCI), a cell global identifier (CGI)) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. Because a cell is supported by a specific base station, the term "cell" may refer to either or both of the logical communication entity and the base station that supports it, depending on the context. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell (SC) base station 102' may have a geographic coverage area 110' that substantially overlaps with the geographic coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include uplink (also referred to as reverse link) transmissions from a UE 104 to a base station 102 and/or downlink (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to downlink and uplink (e.g., more or less carriers may be allocated for downlink than for uplink).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) or listen before talk (LBT) procedure prior to communicating in order to determine whether the channel is available.

The small cell base station 102' may operate in a licensed and/or an unlicensed frequency spectrum. When operating in an unlicensed frequency spectrum, the small cell base station 102' may employ LTE or NR technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. NR in unlicensed spectrum may be referred to as NR-U. LTE in an unlicensed spectrum may be referred to as LTE-U, licensed assisted access (LAA), or MulteFire.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

Transmit beams may be quasi-co-located, meaning that they appear to the receiver (e.g., a UE) as having the same parameters, regardless of whether or not the transmitting antennas of the network node themselves are physically co-located. In NR, there are four types of quasi-co-location (QCL) relations. Specifically, a QCL relation of a given type means that certain parameters about a target reference RF signal on a target beam can be derived from information about a source reference RF signal on a source beam. If the source reference RF signal is QCL Type A, the receiver can use the source reference RF signal to estimate the Doppler shift, Doppler spread, average delay, and delay spread of a target reference RF signal transmitted on the same channel. If the source reference RF signal is QCL Type B, the receiver can use the source reference RF signal to estimate the Doppler shift and Doppler spread of a target reference RF signal transmitted on the same channel. If the source reference RF signal is QCL Type C, the receiver can use the source reference RF signal to estimate the Doppler shift and average delay of a target reference RF signal transmitted on the same channel. If the source reference RF signal is QCL Type D, the receiver can use the source reference RF signal to estimate the spatial receive parameter of a target reference RF signal transmitted on the same channel.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

Receive beams may be spatially related. A spatial relation means that parameters for a transmit beam for a second reference signal can be derived from information about a receive beam for a first reference signal. For example, a UE may use a particular receive beam to receive one or more reference downlink reference signals (e.g., positioning reference signals (PRS), tracking reference signals (TRS), phase tracking reference signal (PTRS), cell-specific reference signals (CRS), channel state information reference signals (CSI-RS), primary synchronization signals (PSS), secondary synchronization signals (SSS), synchronization signal blocks (SSBs), etc.) from a base station. The UE can then form a transmit beam for sending one or more uplink reference signals (e.g., uplink positioning reference signals (UL-PRS), sounding reference signal (SRS), demodulation reference signals (DMRS), PTRS, etc.) to that base station based on the parameters of the receive beam.

Note that a "downlink" beam may be either a transmit beam or a receive beam, depending on the entity forming it. For example, if a base station is forming the downlink beam to transmit a reference signal to a UE, the downlink beam is a transmit beam. If the UE is forming the downlink beam, however, it is a receive beam to receive the downlink reference signal. Similarly, an "uplink" beam may be either a transmit beam or a receive beam, depending on the entity forming it. For example, if a base station is forming the uplink beam, it is an uplink receive beam, and if a UE is forming the uplink beam, it is an uplink transmit beam.

In 5G, the frequency spectrum in which wireless nodes (e.g., base stations 102/180, UEs 104/182) operate is divided into multiple frequency ranges, FR1 (from 450 to 6000 MHz), FR2 (from 24250 to 52600 MHz), FR3 (above 52600 MHz), and FR4 (between FR1 and FR2). In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels, and may be a carrier in a licensed frequency (however, this is not always the case). A secondary carrier is a carrier operating on a second frequency (e.g., FR2) that may be configured once the RRC connection is established between the UE 104 and the anchor carrier and that may be used to provide additional radio resources. In some cases, the secondary carrier may be a carrier in an unlicensed frequency. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include a UE 164 that may communicate with a macro cell base station 102 over a communication link 120 and/or the mmW base station 180 over a mmW communication link 184. For example, the macro cell base station 102 may support a PCell and one or more SCells for the UE 164 and the mmW base station 180 may support one or more SCells for the UE 164.

In the example of FIG. 1, one or more Earth orbiting satellite positioning system (SPS) space vehicles (SVs) 112 (e.g., satellites) may be used as an independent source of location information for any of the illustrated UEs (shown in FIG. 1 as a single UE 104 for simplicity). A UE 104 may include one or more dedicated SPS receivers specifically designed to receive SPS signals 124 for deriving geo location information from the SVs 112. An SPS typically includes a system of transmitters (e.g., SVs 112) positioned to enable receivers (e.g., UEs 104) to determine their location on or above the Earth based, at least in part, on signals (e.g., SPS signals 124) received from the transmitters. Such a transmitter typically transmits a signal marked with a repeating pseudo-random noise (PN) code of a set number of chips. While typically located in SVs 112, transmitters may sometimes be located on ground-based control stations, base stations 102, and/or other UEs 104.

The use of SPS signals 124 can be augmented by various satellite-based augmentation systems (SBAS) that may be associated with or otherwise enabled for use with one or more global and/or regional navigation satellite systems. For example an SBAS may include an augmentation system(s) that provides integrity information, differential corrections, etc., such as the Wide Area Augmentation System (WAAS), the European Geostationary Navigation Overlay Service (EGNOS), the Multi-functional Satellite Augmentation System (MSAS), the Global Positioning System (GPS) Aided Geo Augmented Navigation or GPS and Geo Augmented Navigation system (GAGAN), and/or the like. Thus, as used herein, an SPS may include any combination of one or more global and/or regional navigation satellite systems and/or augmentation systems, and SPS signals 124 may include SPS, SPS-like, and/or other signals associated with such one or more SPS.

The wireless communications system 100 may further include one or more UEs, such as UE 190, that connects indirectly to one or more communication networks via one or more device-to-device (D2D) peer-to-peer (P2P) links (referred to as "sidelinks"). In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth^{®}, and so on.

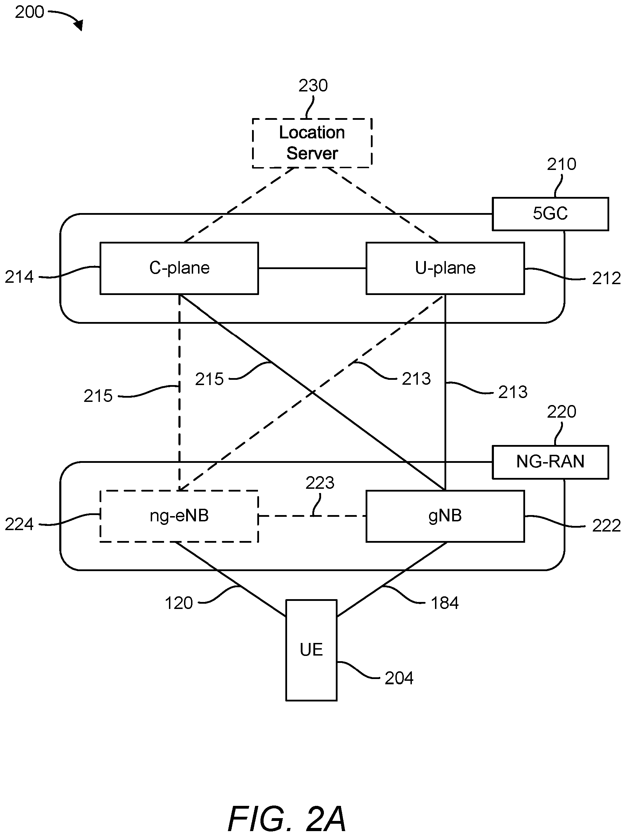

**FIG.** 2A illustrates an example wireless network structure 200. For example, a 5GC 210 (also referred to as a Next Generation Core (NGC)) can be viewed functionally as control plane functions 214 (e.g., UE registration, authentication, network access, gateway selection, etc.) and user plane functions 212, (e.g., UE gateway function, access to data networks, IP routing, etc.) which operate cooperatively to form the core network. User plane interface (NG-U) 213 and control plane interface (NG-C) 215 connect the gNB 222 to the 5GC 210 and specifically to the control plane functions 214 and user plane functions 212. In an additional configuration, an ng-eNB 224 may also be connected to the 5GC 210 via NG-C 215 to the control plane functions 214 and NG-U 213 to user plane functions 212. Further, ng-eNB 224 may directly communicate with gNB 222 via a backhaul connection 223. In some configurations, a Next Generation RAN (NG-RAN) 220 may only have one or more gNBs 222, while other configurations include one or more of both ng-eNBs 224 and gNBs 222. Either gNB 222 or ng-eNB 224 may communicate with UEs 204 (e.g., any of the UEs depicted in FIG. 1). Another optional aspect may include location server 230, which may be in communication with the 5GC 210 to provide location assistance for UEs 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, 5GC 210, and/or via the Internet (not illustrated). Further, the location server 230 may be integrated into a component of the core network, or alternatively may be external to the core network.

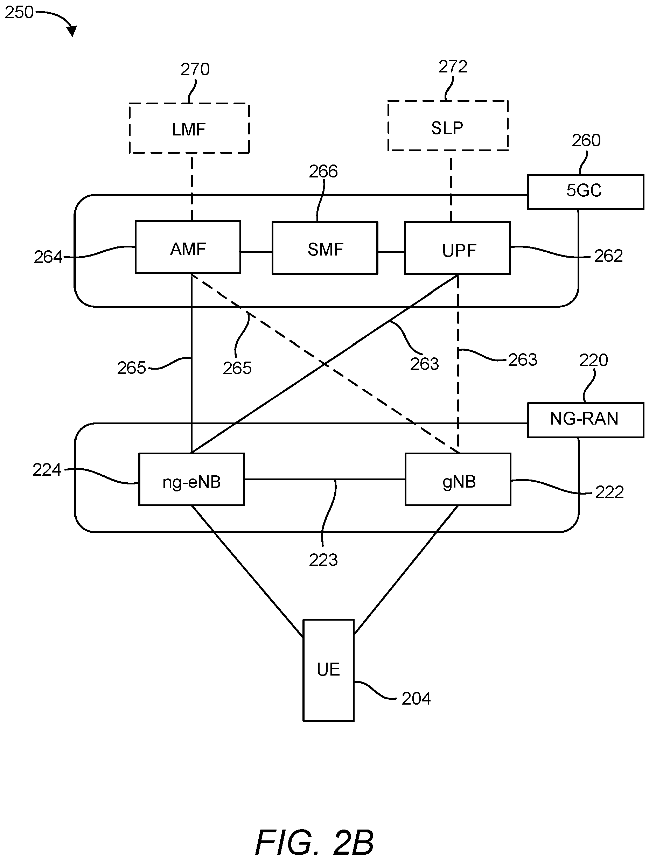

**FIG. 2B** illustrates another example wireless network structure 250. A 5GC 260 (which may correspond to 5GC 210 in FIG. 2A) can be viewed functionally as control plane functions, provided by an access and mobility management function (AMF) 264, and user plane functions, provided by a user plane function (UPF) 262, which operate cooperatively to form the core network (i.e., 5GC 260). User plane interface 263 and control plane interface 265 connect the ng-eNB 224 to the 5GC 260 and specifically to UPF 262 and AMF 264, respectively. In an additional configuration, a gNB 222 may also be connected to the 5GC 260 via control plane interface 265 to AMF 264 and user plane interface 263 to UPF 262. Further, ng-eNB 224 may directly communicate with gNB 222 via the backhaul connection 223, with or without gNB direct connectivity to the 5GC 260. In some configurations, the NG-RAN 220 may only have one or more gNBs 222, while other configurations include one or more of both ng-eNBs 224 and gNBs 222. Either gNB 222 or ng-eNB 224 may communicate with UEs 204 (e.g., any of the UEs depicted in FIG. 1). The base stations of the NG-RAN 220 communicate with the AMF 264 over the N2 interface and with the UPF 262 over the N3 interface.

The functions of the AMF 264 include registration management, connection management, reachability management, mobility management, lawful interception, transport for session management (SM) messages between the UE 204 and a session management function (SMF) 266, transparent proxy services for routing SM messages, access authentication and access authorization, transport for short message service (SMS) messages between the UE 204 and the short message service function (SMSF) (not shown), and security anchor functionality (SEAF). The AMF 264 also interacts with an authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF 264 retrieves the security material from the AUSF. The functions of the AMF 264 also include security context management (SCM). The SCM receives a key from the SEAF that it uses to derive access-network specific keys. The functionality of the AMF 264 also includes location services management for regulatory services, transport for location services messages between the UE 204 and an LMF 270 (which acts as a location server 230), transport for location services messages between the NG-RAN 220 and the LMF 270, evolved packet system (EPS) bearer identifier allocation for interworking with the EPS, and UE 204 mobility event notification. In addition, the AMF 264 also supports functionalities for non-3GPP (Third Generation Partnership Project) access networks.

Functions of the UPF 262 include acting as an anchor point for intra-/inter-RAT mobility (when applicable), acting as an external protocol data unit (PDU) session point of interconnect to a data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., uplink/ downlink rate enforcement, reflective QoS marking in the downlink), uplink traffic verification (service data flow (SDF) to QoS flow mapping), transport level packet marking in the uplink and downlink, downlink packet buffering and downlink data notification triggering, and sending and forwarding of one or more "end markers" to the source RAN node. The UPF 262 may also support transfer of location services messages over a user plane between the UE 204 and a location server, such as an SLP 272.

The functions of the SMF 266 include session management, UE Internet protocol (IP) address allocation and management, selection and control of user plane functions, configuration of traffic steering at the UPF 262 to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the 5GC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, 5GC 260, and/or via the Internet (not illustrated). The SLP 272 may support similar functions to the LMF 270, but whereas the LMF 270 may communicate with the AMF 264, NG-RAN 220, and UEs 204 over a control plane (e.g., using interfaces and protocols intended to convey signaling messages and not voice or data), the SLP 272 may communicate with UEs 204 and external clients (not shown in FIG. 2B) over a user plane (e.g., using protocols intended to carry voice and/or data like the transmission control protocol (TCP) and/or IP).

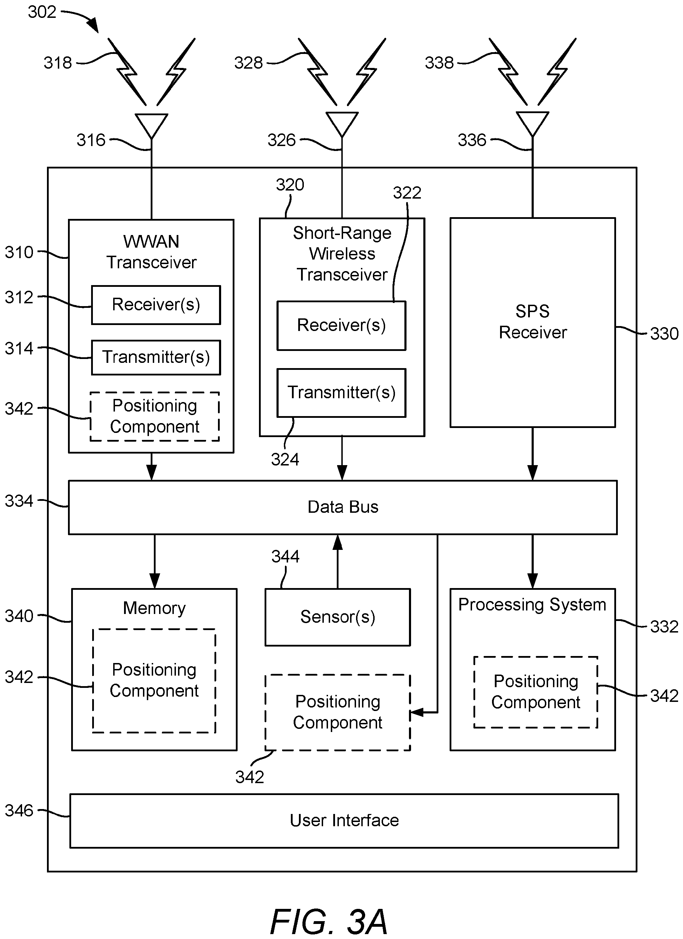

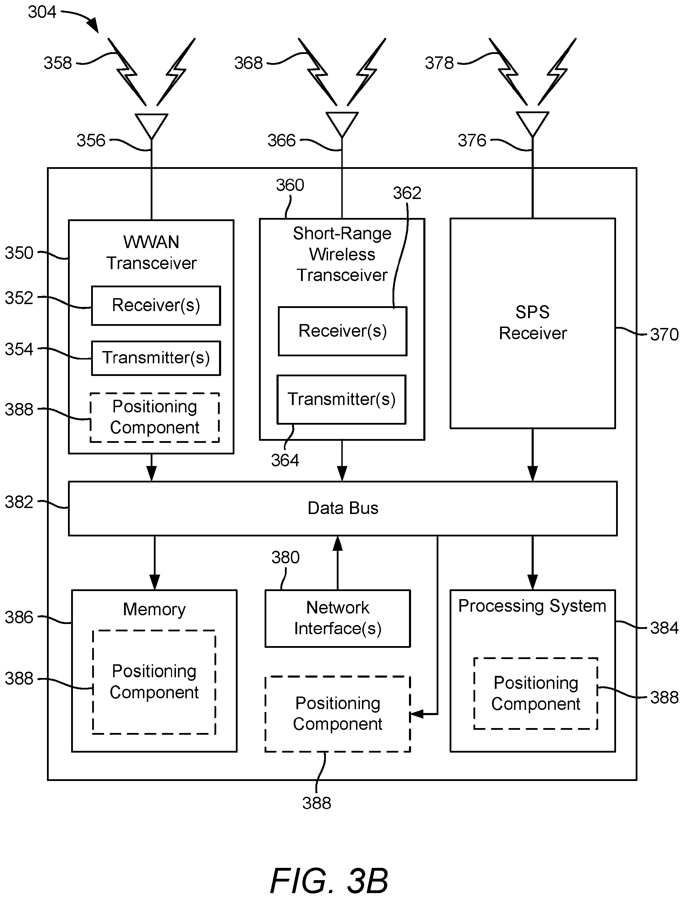

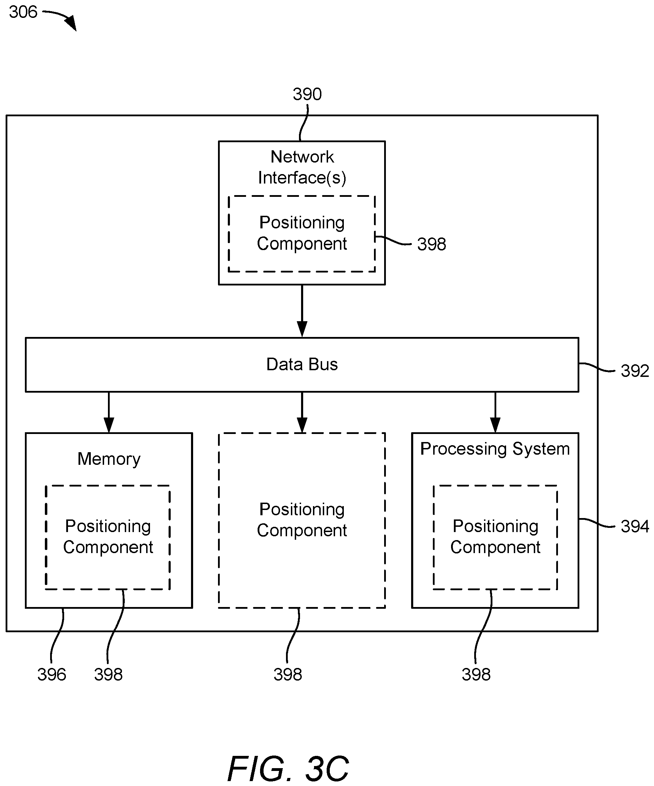

**FIGS. 3A****,** **3B****, and** **3C** illustrate several example components (represented by corresponding blocks) that may be incorporated into a UE 302 (which may correspond to any of the UEs described herein), a base station 304 (which may correspond to any of the base stations described herein), and a network entity 306 (which may correspond to or embody any of the network functions described herein, including the location server 230 and the LMF 270) to support the file transmission operations as taught herein. It will be appreciated that these components may be implemented in different types of apparatuses in different implementations (e.g., in an ASIC, in a system-on-chip (SoC), etc.). The illustrated components may also be incorporated into other apparatuses in a communication system. For example, other apparatuses in a system may include components similar to those described to provide similar functionality. Also, a given apparatus may contain one or more of the components. For example, an apparatus may include multiple transceiver components that enable the apparatus to operate on multiple carriers and/or communicate via different technologies.

The UE 302 and the base station 304 each include wireless wide area network (WWAN) transceiver 310 and 350, respectively, providing means for communicating (e.g., means for transmitting, means for receiving, means for measuring, means for tuning, means for refraining from transmitting, etc.) via one or more wireless communication networks (not shown), such as an NR network, an LTE network, a GSM network, and/or the like. The WWAN transceivers 310 and 350 may be connected to one or more antennas 316 and 356, respectively, for communicating with other network nodes, such as other UEs, access points, base stations (e.g., eNBs, gNBs), etc., via at least one designated RAT (e.g., NR, LTE, GSM, etc.) over a wireless communication medium of interest (e.g., some set of time/frequency resources in a particular frequency spectrum). The WWAN transceivers 310 and 350 may be variously configured for transmitting and encoding signals 318 and 358 (e.g., messages, indications, information, and so on), respectively, and, conversely, for receiving and decoding signals 318 and 358 (e.g., messages, indications, information, pilots, and so on), respectively, in accordance with the designated RAT. Specifically, the WWAN transceivers 310 and 350 include one or more transmitters 314 and 354, respectively, for transmitting and encoding signals 318 and 358, respectively, and one or more receivers 312 and 352, respectively, for receiving and decoding signals 318 and 358, respectively.

The UE 302 and the base station 304 also include, at least in some cases, one or more short-range wireless transceivers 320 and 360, respectively. The short-range wireless transceivers 320 and 360 may be connected to one or more antennas 326 and 366, respectively, and provide means for communicating (e.g., means for transmitting, means for receiving, means for measuring, means for tuning, means for refraining from transmitting, etc.) with other network nodes, such as other UEs, access points, base stations, etc., via at least one designated RAT (e.g., WiFi, LTE-D, Bluetooth^{®}, Zigbee^{®}, Z-Wave^{®}, PC5, dedicated short-range communications (DSRC), wireless access for vehicular environments (WAVE), near-field communication (NFC), etc.) over a wireless communication medium of interest. The short-range wireless transceivers 320 and 360 may be variously configured for transmitting and encoding signals 328 and 368 (e.g., messages, indications, information, and so on), respectively, and, conversely, for receiving and decoding signals 328 and 368 (e.g., messages, indications, information, pilots, and so on), respectively, in accordance with the designated RAT. Specifically, the short-range wireless transceivers 320 and 360 include one or more transmitters 324 and 364, respectively, for transmitting and encoding signals 328 and 368, respectively, and one or more receivers 322 and 362, respectively, for receiving and decoding signals 328 and 368, respectively. As specific examples, the short-range wireless transceivers 320 and 360 may be WiFi transceivers, Bluetooth^{®} transceivers, Zigbee^{®} and/or Z-Wave^{®} transceivers, NFC transceivers, or vehicle-to-vehicle (V2V) and/or vehicle-to-everything (V2X) transceivers.

Transceiver circuitry including at least one transmitter and at least one receiver may comprise an integrated device (e.g., embodied as a transmitter circuit and a receiver circuit of a single communication device) in some implementations, may comprise a separate transmitter device and a separate receiver device in some implementations, or may be embodied in other ways in other implementations. In an aspect, a transmitter may include or be coupled to a plurality of antennas (e.g., antennas 316, 326, 356, 366), such as an antenna array, that permits the respective apparatus to perform transmit "beamforming," as described herein. Similarly, a receiver may include or be coupled to a plurality of antennas (e.g., antennas 316, 326, 356, 366), such as an antenna array, that permits the respective apparatus to perform receive beamforming, as described herein. In an aspect, the transmitter and receiver may share the same plurality of antennas (e.g., antennas 316, 326, 356, 366), such that the respective apparatus can only receive or transmit at a given time, not both at the same time. A wireless communication device (e.g., one or both of the transceivers 310 and 320 and/or 350 and 360) of the UE 302 and/or the base station 304 may also comprise a network listen module (NLM) or the like for performing various measurements.

The UE 302 and the base station 304 also include, at least in some cases, satellite positioning systems (SPS) receivers 330 and 370. The SPS receivers 330 and 370 may be connected to one or more antennas 336 and 376, respectively, and may provide means for receiving and/or measuring SPS signals 338 and 378, respectively, such as global positioning system (GPS) signals, global navigation satellite system (GLONASS) signals, Galileo signals, Beidou signals, Indian Regional Navigation Satellite System (NAVIC), Quasi-Zenith Satellite System (QZSS), etc. The SPS receivers 330 and 370 may comprise any suitable hardware and/or software for receiving and processing SPS signals 338 and 378, respectively. The SPS receivers 330 and 370 request information and operations as appropriate from the other systems, and performs calculations necessary to determine positions of the UE 302 and the base station 304 using measurements obtained by any suitable SPS algorithm.

The base station 304 and the network entity 306 each include at least one network interfaces 380 and 390, respectively, providing means for communicating (e.g., means for transmitting, means for receiving, etc.) with other network entities. For example, the network interfaces 380 and 390 (e.g., one or more network access ports) may be configured to communicate with one or more network entities via a wire-based or wireless backhaul connection. In some aspects, the network interfaces 380 and 390 may be implemented as transceivers configured to support wire-based or wireless signal communication. This communication may involve, for example, sending and receiving messages, parameters, and/or other types of information.

In an aspect, the WWAN transceiver 310 and/or the short-range wireless transceiver 320 may form a (wireless) communication interface of the UE 302. Similarly, the WWAN transceiver 350, the short-range wireless transceiver 360, and/or the network interface(s) 380 may form a (wireless) communication interface of the base station 304. Likewise, the network interface(s) 390 may form a (wireless) communication interface of the network entity 306.

The UE 302, the base station 304, and the network entity 306 also include other components that may be used in conjunction with the operations as disclosed herein. The UE 302 includes processor circuitry implementing a processing system 332 for providing functionality relating to, for example, wireless positioning, and for providing other processing functionality. The base station 304 includes a processing system 384 for providing functionality relating to, for example, wireless positioning as disclosed herein, and for providing other processing functionality. The network entity 306 includes a processing system 394 for providing functionality relating to, for example, wireless positioning as disclosed herein, and for providing other processing functionality. The processing systems 332, 384, and 394 may therefore provide means for processing, such as means for determining, means for calculating, means for receiving, means for transmitting, means for indicating, etc. In an aspect, the processing systems 332, 384, and 394 may include, for example, one or more processors, such as one or more general purpose processors, multi-core processors, ASICs, digital signal processors (DSPs), field programmable gate arrays (FPGA), other programmable logic devices or processing circuitry, or various combinations thereof.

The UE 302, the base station 304, and the network entity 306 include memory circuitry implementing memory components 340, 386, and 396 (e.g., each including a memory device), respectively, for maintaining information (e.g., information indicative of reserved resources, thresholds, parameters, and so on). The memory components 340, 386, and 396 may therefore provide means for storing, means for retrieving, means for maintaining, etc. In some cases, the UE 302, the base station 304, and the network entity 306 may include positioning components 342, 388, and 398, respectively. The positioning components 342, 388, and 398 may be hardware circuits that are part of or coupled to the processing systems 332, 384, and 394, respectively, that, when executed, cause the UE 302, the base station 304, and the network entity 306 to perform the functionality described herein. In other aspects, the positioning components 342, 388, and 398 may be external to the processing systems 332, 384, and 394 (e.g., part of a modem processing system, integrated with another processing system, etc.). Alternatively, the positioning components 342, 388, and 398 may be memory modules stored in the memory components 340, 386, and 396, respectively, that, when executed by the processing systems 332, 384, and 394 (or a modem processing system, another processing system, etc.), cause the UE 302, the base station 304, and the network entity 306 to perform the functionality described herein. FIG. 3A illustrates possible locations of the positioning component 342, which may be part of the WWAN transceiver 310, the memory component 340, the processing system 332, or any combination thereof, or may be a standalone component. FIG. 3B illustrates possible locations of the positioning component 388, which may be part of the WWAN transceiver 350, the memory component 386, the processing system 384, or any combination thereof, or may be a standalone component. FIG. 3C illustrates possible locations of the positioning component 398, which may be part of the network interface(s) 390, the memory component 396, the processing system 394, or any combination thereof, or may be a standalone component.

The UE 302 may include one or more sensors 344 coupled to the processing system 332 to provide means for sensing or detecting movement and/or orientation information that is independent of motion data derived from signals received by the WWAN transceiver 310, the short-range wireless transceiver 320, and/or the SPS receiver 330. By way of example, the sensor(s) 344 may include an accelerometer (e.g., a micro-electrical mechanical systems (MEMS) device), a gyroscope, a geomagnetic sensor (e.g., a compass), an altimeter (e.g., a barometric pressure altimeter), and/or any other type of movement detection sensor. Moreover, the sensor(s) 344 may include a plurality of different types of devices and combine their outputs in order to provide motion information. For example, the sensor(s) 344 may use a combination of a multi-axis accelerometer and orientation sensors to provide the ability to compute positions in 2D and/or 3D coordinate systems.

In addition, the UE 302 includes a user interface 346 providing means for providing indications (e.g., audible and/or visual indications) to a user and/or for receiving user input (e.g., upon user actuation of a sensing device such a keypad, a touch screen, a microphone, and so on). Although not shown, the base station 304 and the network entity 306 may also include user interfaces.

Referring to the processing system 384 in more detail, in the downlink, IP packets from the network entity 306 may be provided to the processing system 384. The processing system 384 may implement functionality for an RRC layer, a packet data convergence protocol (PDCP) layer, a radio link control (RLC) layer, and a medium access control (MAC) layer. The processing system 384 may provide RRC layer functionality associated with broadcasting of system information (e.g., master information block (MIB), system information blocks (SIBs)), RRC connection control (e.g., RRC connection paging, RRC connection establishment, RRC connection modification, and RRC connection release), inter-RAT mobility, and measurement configuration for UE measurement reporting; PDCP layer functionality associated with header compression/decompression, security (ciphering, deciphering, integrity protection, integrity verification), and handover support functions; RLC layer functionality associated with the transfer of upper layer PDUs, error correction through automatic repeat request (ARQ), concatenation, segmentation, and reassembly of RLC service data units (SDUs), re-segmentation of RLC data PDUs, and reordering of RLC data PDUs; and MAC layer functionality associated with mapping between logical channels and transport channels, scheduling information reporting, error correction, priority handling, and logical channel prioritization.

The transmitter 354 and the receiver 352 may implement Layer-1 (L1) functionality associated with various signal processing functions. Layer-1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The transmitter 354 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an orthogonal frequency division multiplexing (OFDM) subcarrier, multiplexed with a reference signal (e.g., pilot) in the time and/or frequency domain, and then combined together using an inverse fast Fourier transform (IFFT) to produce a physical channel carrying a time domain OFDM symbol stream. The OFDM symbol stream is spatially precoded to produce multiple spatial streams. Channel estimates from a channel estimator may be used to determine the coding and modulation scheme, as well as for spatial processing. The channel estimate may be derived from a reference signal and/or channel condition feedback transmitted by the UE 302. Each spatial stream may then be provided to one or more different antennas 356. The transmitter 354 may modulate an RF carrier with a respective spatial stream for transmission.

At the UE 302, the receiver 312 receives a signal through its respective antenna(s) 316. The receiver 312 recovers information modulated onto an RF carrier and provides the information to the processing system 332. The transmitter 314 and the receiver 312 implement Layer-1 functionality associated with various signal processing functions. The receiver 312 may perform spatial processing on the information to recover any spatial streams destined for the UE 302. If multiple spatial streams are destined for the UE 302, they may be combined by the receiver 312 into a single OFDM symbol stream. The receiver 312 then converts the OFDM symbol stream from the time-domain to the frequency domain using a fast Fourier transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 304. These soft decisions may be based on channel estimates computed by a channel estimator. The soft decisions are then decoded and de-interleaved to recover the data and control signals that were originally transmitted by the base station 304 on the physical channel. The data and control signals are then provided to the processing system 332, which implements Layer-3 (L3) and Layer-2 (L2) functionality.

In the uplink, the processing system 332 provides demultiplexing between transport and logical channels, packet reassembly, deciphering, header decompression, and control signal processing to recover IP packets from the core network. The processing system 332 is also responsible for error detection.

Similar to the functionality described in connection with the downlink transmission by the base station 304, the processing system 332 provides RRC layer functionality associated with system information (e.g., MIB, SIBs) acquisition, RRC connections, and measurement reporting; PDCP layer functionality associated with header compression/decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through hybrid automatic repeat request (HARQ), priority handling, and logical channel prioritization.

Channel estimates derived by the channel estimator from a reference signal or feedback transmitted by the base station 304 may be used by the transmitter 314 to select the appropriate coding and modulation schemes, and to facilitate spatial processing. The spatial streams generated by the transmitter 314 may be provided to different antenna(s) 316. The transmitter 314 may modulate an RF carrier with a respective spatial stream for transmission.

The uplink transmission is processed at the base station 304 in a manner similar to that described in connection with the receiver function at the UE 302. The receiver 352 receives a signal through its respective antenna(s) 356. The receiver 352 recovers information modulated onto an RF carrier and provides the information to the processing system 384.

In the uplink, the processing system 384 provides demultiplexing between transport and logical channels, packet reassembly, deciphering, header decompression, control signal processing to recover IP packets from the UE 302. IP packets from the processing system 384 may be provided to the core network. The processing system 384 is also responsible for error detection.

For convenience, the UE 302, the base station 304, and/or the network entity 306 are shown in FIGS. 3A to 3C as including various components that may be configured according to the various examples described herein. It will be appreciated, however, that the illustrated blocks may have different functionality in different designs.

The various components of the UE 302, the base station 304, and the network entity 306 may communicate with each other over data buses 334, 382, and 392, respectively. In an aspect, the data buses 334, 382, and 392 may form, or be part of, the communication interface of the UE 302, the base station 304, and the network entity 306, respectively. For example, where different logical entities are embodied in the same device (e.g., gNB and location server functionality incorporated into the same base station 304), the data buses 334, 382, and 392 may provide communication between them.

The components of FIGS. 3A to 3C may be implemented in various ways. In some implementations, the components of FIGS. 3A to 3C may be implemented in one or more circuits such as, for example, one or more processors and/or one or more ASICs (which may include one or more processors). Here, each circuit may use and/or incorporate at least one memory component for storing information or executable code used by the circuit to provide this functionality. For example, some or all of the functionality represented by blocks 310 to 346 may be implemented by processor and memory component(s) of the UE 302 (e.g., by execution of appropriate code and/or by appropriate configuration of processor components). Similarly, some or all of the functionality represented by blocks 350 to 388 may be implemented by processor and memory component(s) of the base station 304 (e.g., by execution of appropriate code and/or by appropriate configuration of processor components). Also, some or all of the functionality represented by blocks 390 to 398 may be implemented by processor and memory component(s) of the network entity 306 (e.g., by execution of appropriate code and/or by appropriate configuration of processor components). For simplicity, various operations, acts, and/or functions are described herein as being performed "by a UE," "by a base station," "by a network entity," etc. However, as will be appreciated, such operations, acts, and/or functions may actually be performed by specific components or combinations of components of the UE 302, base station 304, network entity 306, etc., such as the processing systems 332, 384, 394, the transceivers 310, 320, 350, and 360, the memory components 340, 386, and 396, the positioning components 342, 388, and 398, etc.

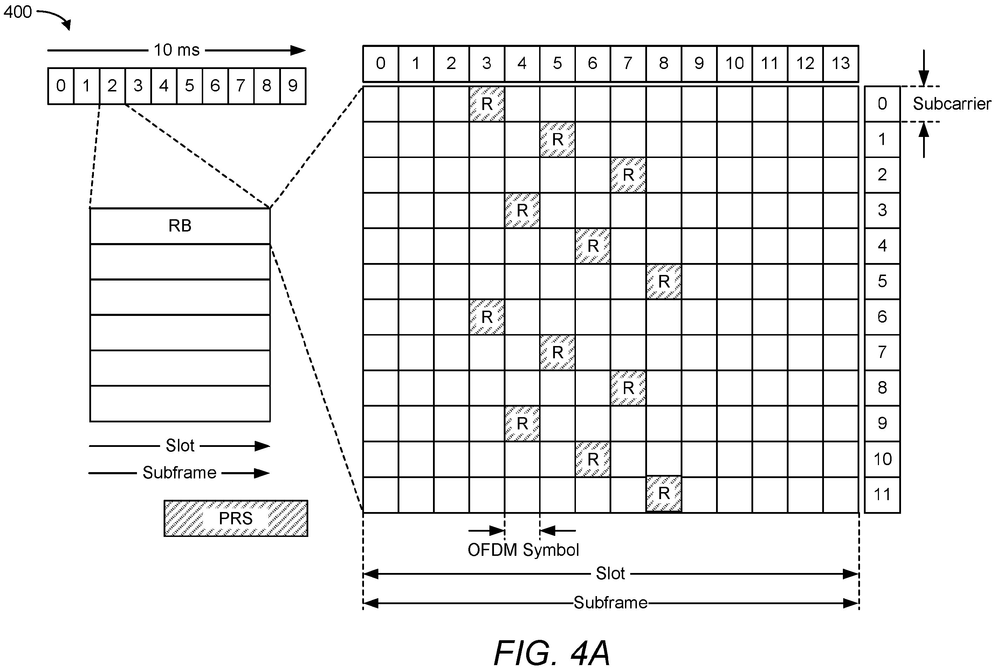

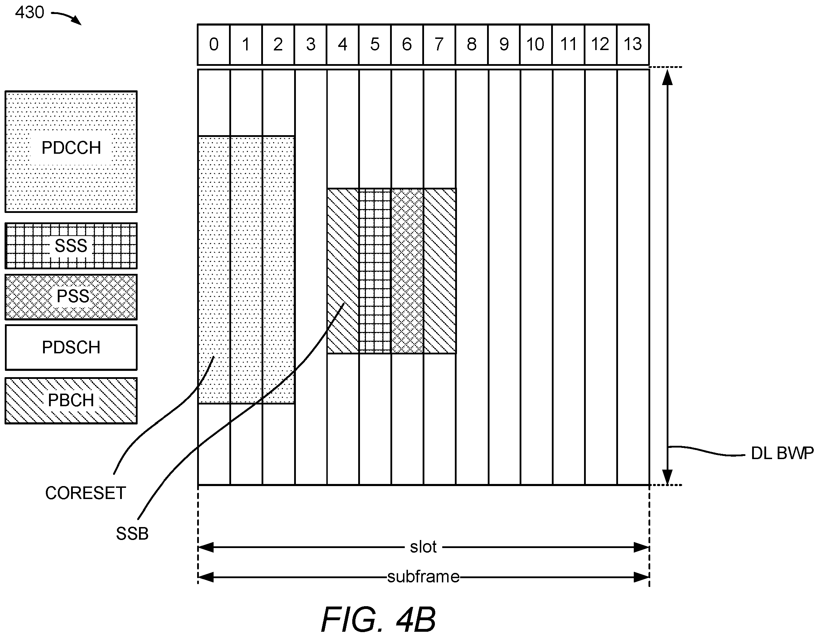

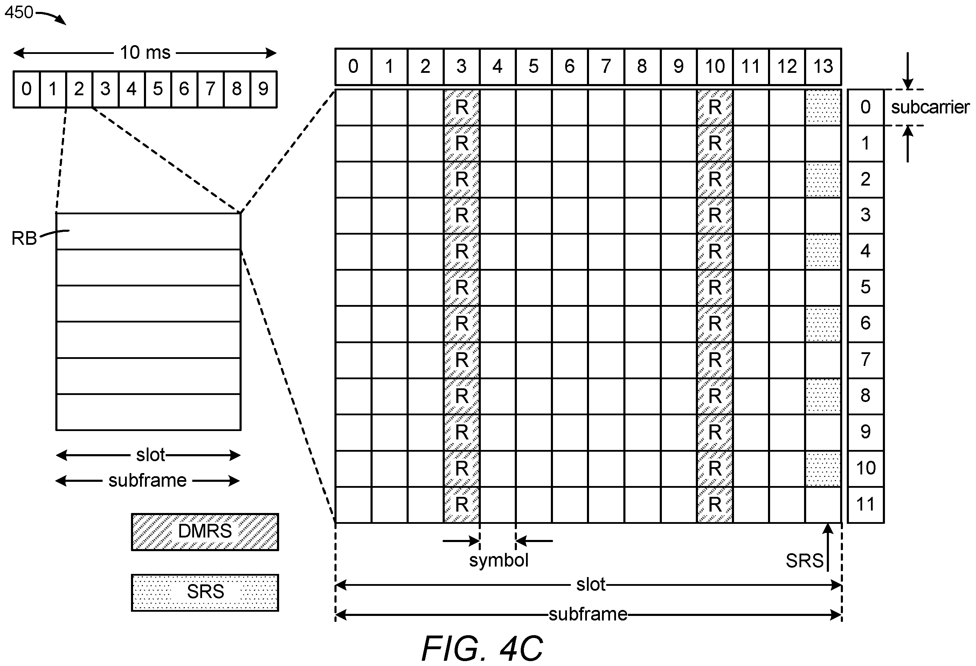

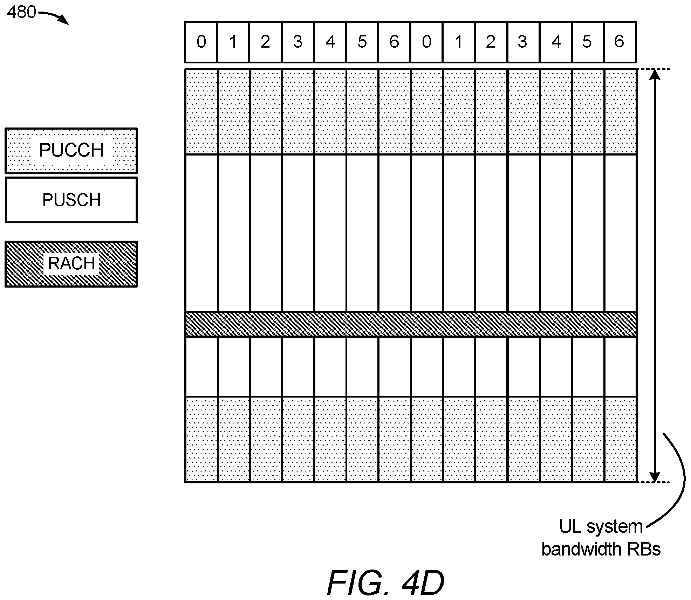

Various frame structures may be used to support downlink and uplink transmissions between network nodes (e.g., base stations and UEs). **FIG. 4A** is a diagram 400 illustrating an example of a downlink frame structure, according to aspects of the disclosure. **FIG. 4B** is a diagram 430 illustrating an example of channels within the downlink frame structure, according to aspects of the disclosure. **FIG. 4C** is a diagram 450 illustrating an example of an uplink frame structure, according to aspects of the disclosure. **FIG. 4D** is a diagram 480 illustrating an example of channels within an uplink frame structure, according to aspects of the disclosure. Other wireless communications technologies may have different frame structures and/or different channels.

LTE, and in some cases NR, utilizes OFDM on the downlink and single-carrier frequency division multiplexing (SC-FDM) on the uplink. Unlike LTE, however, NR has an option to use OFDM on the uplink as well. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kilohertz (kHz) and the minimum resource allocation (resource block) may be 12 subcarriers (or 180 kHz). Consequently, the nominal FFT size may be equal to 128, 256, 512, 1024, or 2048 for system bandwidth of 1.25, 2.5, 5, 10, or 20 megahertz (MHz), respectively. The system bandwidth may also be partitioned into subbands. For example, a subband may cover 1.08 MHz (i.e., 6 resource blocks), and there may be 1, 2, 4, 8, or 16 subbands for system bandwidth of 1.25, 2.5, 5, 10, or 20 MHz, respectively.

LTE supports a single numerology (subcarrier spacing (SCS), symbol length, etc.). In contrast, NR may support multiple numerologies (µ), for example, subcarrier spacings of 15 kHz (µ=0), 30 kHz (µ=1), 60 kHz (µ=2), 120 kHz (µ=3), and 240 kHz (µ=4) or greater may be available. In each subcarrier spacing, there are 14 symbols per slot. For 15 kHz SCS (µ=0), there is one slot per subframe, 10 slots per frame, the slot duration is 1 millisecond (ms), the symbol duration is 66.7 microseconds (µs), and the maximum nominal system bandwidth (in MHz) with a 4K FFT size is 50. For 30 kHz SCS (µ=1), there are two slots per subframe, 20 slots per frame, the slot duration is 0.5 ms, the symbol duration is 33.3 µs, and the maximum nominal system bandwidth (in MHz) with a 4K FFT size is 100. For 60 kHz SCS (µ=2), there are four slots per subframe, 40 slots per frame, the slot duration is 0.25 ms, the symbol duration is 16.7 µs, and the maximum nominal system bandwidth (in MHz) with a 4K FFT size is 200. For 120 kHz SCS (µ=3), there are eight slots per subframe, 80 slots per frame, the slot duration is 0.125 ms, the symbol duration is 8.33 µs, and the maximum nominal system bandwidth (in MHz) with a 4K FFT size is 400. For 240 kHz SCS (µ=4), there are 16 slots per subframe, 160 slots per frame, the slot duration is 0.0625 ms, the symbol duration is 4.17 µs, and the maximum nominal system bandwidth (in MHz) with a 4K FFT size is 800.

In the example of FIGS. 4A to 4D, a numerology of 15 kHz is used. Thus, in the time domain, a 10 ms frame is divided into 10 equally sized subframes of 1 ms each, and each subframe includes one time slot. In FIGS. 4A to 4D, time is represented horizontally (on the X axis) with time increasing from left to right, while frequency is represented vertically (on the Y axis) with frequency increasing (or decreasing) from bottom to top.

A resource grid may be used to represent time slots, each time slot including one or more time-concurrent resource blocks (RBs) (also referred to as physical RBs (PRBs)) in the frequency domain. The resource grid is further divided into multiple resource elements (REs). An RE may correspond to one symbol length in the time domain and one subcarrier in the frequency domain. In the numerology of FIGS. 4A to 4D, for a normal cyclic prefix, an RB may contain 12 consecutive subcarriers in the frequency domain and seven consecutive symbols in the time domain, for a total of 84 REs. For an extended cyclic prefix, an RB may contain 12 consecutive subcarriers in the frequency domain and six consecutive symbols in the time domain, for a total of 72 REs. The number of bits carried by each RE depends on the modulation scheme.

Some of the REs carry downlink reference (pilot) signals (DL-RS). The DL-RS may include PRS, TRS, PTRS, CRS, CSI-RS, DMRS, PSS, SSS, SSB, etc. FIG. 4A illustrates example locations of REs carrying PRS (labeled "R").

A collection of resource elements (REs) that are used for transmission of PRS is referred to as a "PRS resource." The collection of resource elements can span multiple PRBs in the frequency domain and 'N' (such as 1 or more) consecutive symbol(s) within a slot in the time domain. In a given OFDM symbol in the time domain, a PRS resource occupies consecutive PRBs in the frequency domain.

The transmission of a PRS resource within a given PRB has a particular comb size (also referred to as the "comb density"). A comb size 'N' represents the subcarrier spacing (or frequency/tone spacing) within each symbol of a PRS resource configuration. Specifically, for a comb size 'N,' PRS are transmitted in every Nth subcarrier of a symbol of a PRB. For example, for comb-4, for each symbol of the PRS resource configuration, REs corresponding to every fourth subcarrier (such as subcarriers 0, 4, 8) are used to transmit PRS of the PRS resource. Currently, comb sizes of comb-2, comb-4, comb-6, and comb-12 are supported for DL-PRS. FIG. 4A illustrates an example PRS resource configuration for comb-6 (which spans six symbols). That is, the locations of the shaded REs (labeled "R") indicate a comb-6 PRS resource configuration.

Currently, a DL-PRS resource may span 2, 4, 6, or 12 consecutive symbols within a slot with a fully frequency-domain staggered pattern. A DL-PRS resource can be configured in any higher layer configured downlink or flexible (FL) symbol of a slot. There may be a constant energy per resource element (EPRE) for all REs of a given DL-PRS resource. The following are the frequency offsets from symbol to symbol for comb sizes 2, 4, 6, and 12 over 2, 4, 6, and 12 symbols. 2-symbol comb-2: {0, 1}; 4-symbol comb-2: {0, 1, 0, 1}; 6-symbol comb-2: {0, 1, 0, 1, 0, 1}; 12-symbol comb-2: {0, 1, 0, 1, 0, 1, 0, 1, 0, 1, 0, 1}; 4-symbol comb-4: {0, 2, 1, 3}; 12-symbol comb-4: {0, 2, 1, 3, 0, 2, 1, 3, 0, 2, 1, 3}; 6-symbol comb-6: {0, 3, 1, 4, 2, 5}; 12-symbol comb-6: {0, 3, 1, 4, 2, 5, 0, 3, 1, 4, 2, 5}; and 12-symbol comb-12: {0, 6, 3, 9, 1, 7, 4, 10, 2, 8, 5, 11}.

A "PRS resource set" is a set of PRS resources used for the transmission of PRS signals, where each PRS resource has a PRS resource ID. In addition, the PRS resources in a PRS resource set are associated with the same TRP. A PRS resource set is identified by a PRS resource set ID and is associated with a particular TRP (identified by a TRP ID). In addition, the PRS resources in a PRS resource set have the same periodicity, a common muting pattern configuration, and the same repetition factor (such as "PRS-ResourceRepetitionFactor") across slots. The periodicity is the time from the first repetition of the first PRS resource of a first PRS instance to the same first repetition of the same first PRS resource of the next PRS instance. The periodicity may have a length selected from 2^µ*{4, 5, 8, 10, 16, 20, 32, 40, 64, 80, 160, 320, 640, 1280, 2560, 5120, 10240} slots, with µ = 0, 1, 2, 3. The repetition factor may have a length selected from {1, 2, 4, 6, 8, 16, 32} slots.

A PRS resource ID in a PRS resource set is associated with a single beam (or beam ID) transmitted from a single TRP (where a TRP may transmit one or more beams). That is, each PRS resource of a PRS resource set may be transmitted on a different beam, and as such, a "PRS resource," or simply "resource," also can be referred to as a "beam." Note that this does not have any implications on whether the TRPs and the beams on which PRS are transmitted are known to the UE.

A "PRS instance" or "PRS occasion" is one instance of a periodically repeated time window (such as a group of one or more consecutive slots) where PRS are expected to be transmitted. A PRS occasion also may be referred to as a "PRS positioning occasion," a "PRS positioning instance, a "positioning occasion," "a positioning instance," a "positioning repetition," or simply an "occasion," an "instance," or a "repetition."

A "positioning frequency layer" (also referred to simply as a "frequency layer") is a collection of one or more PRS resource sets across one or more TRPs that have the same values for certain parameters. Specifically, the collection of PRS resource sets has the same subcarrier spacing and cyclic prefix (CP) type (meaning all numerologies supported for the PDSCH are also supported for PRS), the same Point A, the same value of the downlink PRS bandwidth, the same start PRB (and center frequency), and the same comb-size. The Point A parameter takes the value of the parameter "ARFCN-ValueNR" (where "ARFCN" stands for "absolute radio-frequency channel number") and is an identifier/code that specifies a pair of physical radio channel used for transmission and reception. The downlink PRS bandwidth may have a granularity of four PRBs, with a minimum of 24 PRBs and a maximum of 272 PRBs. Currently, up to four frequency layers have been defined, and up to two PRS resource sets may be configured per TRP per frequency layer.

The concept of a frequency layer is somewhat like the concept of component carriers and bandwidth parts (BWPs), but different in that component carriers and BWPs are used by one base station (or a macro cell base station and a small cell base station) to transmit data channels, while frequency layers are used by several (usually three or more) base stations to transmit PRS. A UE may indicate the number of frequency layers it can support when it sends the network its positioning capabilities, such as during an LTE positioning protocol (LPP) session. For example, a UE may indicate whether it can support one or four positioning frequency layers.

FIG. 4B illustrates an example of various channels within a downlink slot of a radio frame. In NR, the channel bandwidth, or system bandwidth, is divided into multiple BWPs. A BWP is a contiguous set of PRBs selected from a contiguous subset of the common RBs for a given numerology on a given carrier. Generally, a maximum of four BWPs can be specified in the downlink and uplink. That is, a UE can be configured with up to four BWPs on the downlink, and up to four BWPs on the uplink. Only one BWP (uplink or downlink) may be active at a given time, meaning the UE may only receive or transmit over one BWP at a time. On the downlink, the bandwidth of each BWP should be equal to or greater than the bandwidth of the SSB, but it may or may not contain the SSB.

Referring to FIG. 4B, a primary synchronization signal (PSS) is used by a UE to determine subframe/symbol timing and a physical layer identity. A secondary synchronization signal (SSS) is used by a UE to determine a physical layer cell identity group number and radio frame timing. Based on the physical layer identity and the physical layer cell identity group number, the UE can determine a PCI. Based on the PCI, the UE can determine the locations of the aforementioned DL-RS. The physical broadcast channel (PBCH), which carries an MIB, may be logically grouped with the PSS and SSS to form an SSB (also referred to as an SS/PBCH). The MIB provides a number of RBs in the downlink system bandwidth and a system frame number (SFN). The physical downlink shared channel (PDSCH) carries user data, broadcast system information not transmitted through the PBCH, such as system information blocks (SIBs), and paging messages.

The physical downlink control channel (PDCCH) carries downlink control information (DCI) within one or more control channel elements (CCEs), each CCE including one or more RE group (REG) bundles (which may span multiple symbols in the time domain), each REG bundle including one or more REGs, each REG corresponding to 12 resource elements (one resource block) in the frequency domain and one OFDM symbol in the time domain. The set of physical resources used to carry the PDCCH/DCI is referred to in NR as the control resource set (CORESET). In NR, a PDCCH is confined to a single CORESET and is transmitted with its own DMRS. This enables UE-specific beamforming for the PDCCH.

In the example of FIG. 4B, there is one CORESET per BWP, and the CORESET spans three symbols (although it may be only one or two symbols) in the time domain. Unlike LTE control channels, which occupy the entire system bandwidth, in NR, PDCCH channels are localized to a specific region in the frequency domain (i.e., a CORESET). Thus, the frequency component of the PDCCH shown in FIG. 4B is illustrated as less than a single BWP in the frequency domain. Note that although the illustrated CORESET is contiguous in the frequency domain, it need not be. In addition, the CORESET may span less than three symbols in the time domain.

The DCI within the PDCCH carries information about uplink resource allocation (persistent and non-persistent) and descriptions about downlink data transmitted to the UE, referred to as uplink and downlink grants, respectively. More specifically, the DCI indicates the resources scheduled for the downlink data channel (e.g., PDSCH) and the uplink data channel (e.g., PUSCH). Multiple (e.g., up to eight) DCIs can be configured in the PDCCH, and these DCIs can have one of multiple formats. For example, there are different DCI formats for uplink scheduling, for downlink scheduling, for uplink transmit power control (TPC), etc. A PDCCH may be transported by 1, 2, 4, 8, or 16 CCEs in order to accommodate different DCI payload sizes or coding rates.

As illustrated in FIG. 4C, some of the REs (labeled "R") carry DMRS for channel estimation at the receiver (e.g., a base station, another UE, etc.). A UE may additionally transmit SRS in, for example, the last symbol of a slot. The SRS may have a comb structure, and a UE may transmit SRS on one of the combs. In the example of FIG. 4C, the illustrated SRS is comb-2 over one symbol. The SRS may be used by a base station to obtain the channel state information (CSI) for each UE. CSI describes how an RF signal propagates from the UE to the base station and represents the combined effect of scattering, fading, and power decay with distance. The system uses the SRS for resource scheduling, link adaptation, massive MIMO, beam management, etc.

Currently, an SRS resource may span 1, 2, 4, 8, or 12 consecutive symbols within a slot with a comb size of comb-2, comb-4, or comb-8. The following are the frequency offsets from symbol to symbol for the SRS comb patterns that are currently supported. 1-symbol comb-2: {0}; 2-symbol comb-2: {0, 1}; 4-symbol comb-2: {0, 1, 0, 1}; 4-symbol comb-4: {0, 2, 1, 3}; 8-symbol comb-4: {0, 2, 1, 3, 0, 2, 1,3}; 12-symbol comb-4: {0, 2, 1, 3, 0, 2, 1, 3, 0, 2, 1, 3}; 4-symbol comb-8: {0, 4, 2, 6}; 8-symbol comb-8: {0, 4, 2, 6, 1, 5, 3, 7}; and 12-symbol comb-8: {0, 4, 2, 6, 1, 5, 3, 7, 0, 4, 2, 6}.

A collection of resource elements that are used for transmission of SRS is referred to as an "SRS resource," and may be identified by the parameter "SRS-ResourceId." The collection of resource elements can span multiple PRBs in the frequency domain and N (e.g., one or more) consecutive symbol(s) within a slot in the time domain. In a given OFDM symbol, an SRS resource occupies consecutive PRBs. An "SRS resource set" is a set of SRS resources used for the transmission of SRS signals, and is identified by an SRS resource set ID ("SRS-ResourceSetId").

Generally, a UE transmits SRS to enable the receiving base station (either the serving base station or a neighboring base station) to measure the channel quality between the UE and the base station. However, SRS can also be specifically configured as uplink positioning reference signals for uplink-based positioning procedures, such as uplink time difference of arrival (UL-TDOA), round-trip-time (RTT), uplink angle-of-arrival (UL-AoA), etc. As used herein, the term "SRS" may refer to SRS configured for channel quality measurements or SRS configured for positioning purposes. The former may be referred to herein as "SRS-for-communication" and/or the latter may be referred to as "SRS-for-positioning" when needed to distinguish the two types of SRS.

Several enhancements over the previous definition of SRS have been proposed for SRS-for-positioning (also referred to as "UL-PRS"), such as a new staggered pattern within an SRS resource (except for single-symbol/comb-2), a new comb type for SRS, new sequences for SRS, a higher number of SRS resource sets per component carrier, and a higher number of SRS resources per component carrier. In addition, the parameters "SpatialRelationInfo" and "PathLossReference" are to be configured based on a downlink reference signal or SSB from a neighboring TRP. Further still, one SRS resource may be transmitted outside the active BWP, and one SRS resource may span across multiple component carriers. Also, SRS may be configured in RRC connected state and only transmitted within an active BWP. Further, there may be no frequency hopping, no repetition factor, a single antenna port, and new lengths for SRS (e.g., 8 and 12 symbols). There also may be open-loop power control and not closed-loop power control, and comb-8 (i.e., an SRS transmitted every eighth subcarrier in the same symbol) may be used. Lastly, the UE may transmit through the same transmit beam from multiple SRS resources for UL-AoA. All of these are features that are additional to the current SRS framework, which is configured through RRC higher layer signaling (and potentially triggered or activated through MAC control element (CE) or DCI).

FIG. 4D illustrates an example of various channels within an uplink slot of a frame, according to aspects of the disclosure. A random-access channel (RACH), also referred to as a physical random-access channel (PRACH), may be within one or more slots within a frame based on the PRACH configuration. The PRACH may include six consecutive RB pairs within a slot. The PRACH allows the UE to perform initial system access and achieve uplink synchronization. A physical uplink control channel (PUCCH) may be located on edges of the uplink system bandwidth. The PUCCH carries uplink control information (UCI), such as scheduling requests, CSI reports, a channel quality indicator (CQI), a precoding matrix indicator (PMI), a rank indicator (RI), and HARQ ACK/NACK feedback. The physical uplink shared channel (PUSCH) carries data, and may additionally be used to carry a buffer status report (BSR), a power headroom report (PHR), and/or UCI.

Note that the terms "positioning reference signal" and "PRS" generally refer to specific reference signals that are used for positioning in NR and LTE systems. However, as used herein, the terms "positioning reference signal" and "PRS" may also refer to any type of reference signal that can be used for positioning, such as but not limited to, PRS as defined in LTE and NR, TRS, PTRS, CRS, CSI-RS, DMRS, PSS, SSS, SSB, SRS, UL-PRS, etc. In addition, the terms "positioning reference signal" and "PRS" may refer to downlink or uplink positioning reference signals, unless otherwise indicated by the context. If needed to further distinguish the type of PRS, a downlink positioning reference signal may be referred to as a "DL-PRS," and an uplink positioning reference signal (e.g., an SRS-for-positioning, PTRS) may be referred to as an "UL-PRS." In addition, for signals that may be transmitted in both the uplink and downlink (e.g., DMRS, PTRS), the signals may be prepended with "UL" or "DL" to distinguish the direction. For example, "UL-DMRS" may be differentiated from "DL-DMRS."

NR supports a number of cellular network-based positioning technologies, including downlink-based, uplink-based, and downlink-and-uplink-based positioning methods. Downlink-based positioning methods include observed time difference of arrival (OTDOA) in LTE, downlink time difference of arrival (DL-TDOA) in NR, and downlink angle-of-departure (DL-AoD) in NR. In an OTDOA or DL-TDOA positioning procedure, a UE measures the differences between the times of arrival (ToAs) of reference signals (e.g., PRS, TRS, CSI-RS, SSB, etc.) received from pairs of base stations, referred to as reference signal time difference (RSTD) or time difference of arrival (TDOA) measurements, and reports them to a positioning entity. More specifically, the UE receives the identifiers (IDs) of a reference base station (e.g., a serving base station) and multiple non-reference base stations in assistance data. The UE then measures the RSTD between the reference base station and each of the non-reference base stations. Based on the known locations of the involved base stations and the RSTD measurements, the positioning entity can estimate the UE's location.

For DL-AoD positioning, the positioning entity uses a beam report from the UE of received signal strength measurements of multiple downlink transmit beams to determine the angle(s) between the UE and the transmitting base station(s). The positioning entity can then estimate the location of the UE based on the determined angle(s) and the known location(s) of the transmitting base station(s).

Uplink-based positioning methods include uplink time difference of arrival (UL-TDOA) and uplink angle-of-arrival (UL-AoA). UL-TDOA is similar to DL-TDOA, but is based on uplink reference signals (e.g., SRS) transmitted by the UE. For UL-AoA positioning, one or more base stations measure the received signal strength of one or more uplink reference signals (e.g., SRS) received from a UE on one or more uplink receive beams. The positioning entity uses the signal strength measurements and the angle(s) of the receive beam(s) to determine the angle(s) between the UE and the base station(s). Based on the determined angle(s) and the known location(s) of the base station(s), the positioning entity can then estimate the location of the UE.

Downlink-and-uplink-based positioning methods include enhanced cell-ID (E-CID) positioning and multi-round-trip-time (RTT) positioning (also referred to as "multi-cell RTT"). In an RTT procedure, an initiator (a base station or a UE) transmits an RTT measurement signal (e.g., a PRS or SRS) to a responder (a UE or base station), which transmits an RTT response signal (e.g., an SRS or PRS) back to the initiator. The RTT response signal includes the difference between the ToA of the RTT measurement signal and the transmission time of the RTT response signal, referred to as the reception-to-transmission (Rx-Tx) time difference. The initiator calculates the difference between the transmission time of the RTT measurement signal and the ToA of the RTT response signal, referred to as the transmission-to-reception (Tx-Rx) time difference. The propagation time (also referred to as the "time of flight") between the initiator and the responder can be calculated from the Tx-Rx and Rx-Tx time differences. Based on the propagation time and the known speed of light, the distance between the initiator and the responder can be determined. For multi-RTT positioning, a UE performs an RTT procedure with multiple base stations to enable its location to be triangulated based on the known locations of the base stations. RTT and multi-RTT methods can be combined with other positioning techniques, such as UL-AoA and DL-AoD, to improve location accuracy.

The E-CID positioning method is based on radio resource management (RRM) measurements. In E-CID, the UE reports the serving cell ID, the timing advance (TA), and the identifiers, estimated timing, and signal strength of detected neighbor base stations. The location of the UE is then estimated based on this information and the known locations of the base station(s).

To assist positioning operations, a location server (e.g., location server 230, LMF 270, SLP 272) may provide assistance data to the UE. For example, the assistance data may include identifiers of the base stations (or the cells/TRPs of the base stations) from which to measure reference signals, the reference signal configuration parameters (e.g., the number of consecutive positioning subframes, periodicity of positioning subframes, muting sequence, frequency hopping sequence, reference signal identifier, reference signal bandwidth, etc.), and/or other parameters applicable to the particular positioning method. Alternatively, the assistance data may originate directly from the base stations themselves (e.g., in periodically broadcasted overhead messages, etc.). in some cases, the UE may be able to detect neighbor network nodes itself without the use of assistance data.

In the case of an OTDOA or DL-TDOA positioning procedure, the assistance data may further include an expected RSTD value and an associated uncertainty, or search window, around the expected RSTD. In some cases, the value range of the expected RSTD may be +/- 500 microseconds (µs). In some cases, when any of the resources used for the positioning measurement are in FR1, the value range for the uncertainty of the expected RSTD may be +/- 32 µs. In other cases, when all of the resources used for the positioning measurement(s) are in FR2, the value range for the uncertainty of the expected RSTD may be +/- 8 µs.

A location estimate may be referred to by other names, such as a position estimate, location, position, position fix, fix, or the like. A location estimate may be geodetic and comprise coordinates (e.g., latitude, longitude, and possibly altitude) or may be civic and comprise a street address, postal address, or some other verbal description of a location. A location estimate may further be defined relative to some other known location or defined in absolute terms (e.g., using latitude, longitude, and possibly altitude). A location estimate may include an expected error or uncertainty (e.g., by including an area or volume within which the location is expected to be included with some specified or default level of confidence).

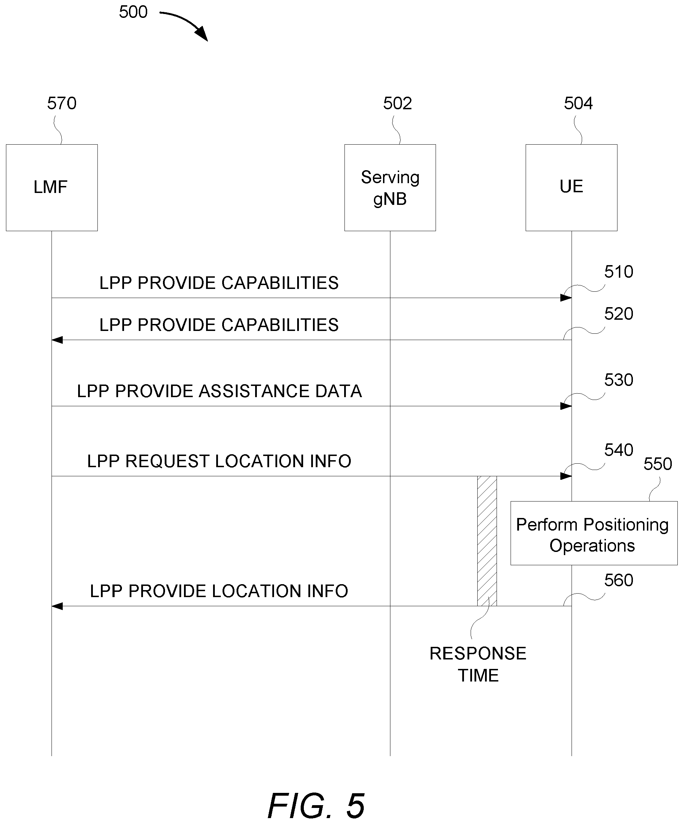

FIG. 5 illustrates an example Long-Term Evolution (LTE) positioning protocol (LPP) procedure 500 between a UE 504 and a location server (illustrated as a location management function (LMF) 570) for performing positioning operations. As illustrated in FIG. 5, positioning of the UE 504 is supported via an exchange of LPP messages between the UE 504 and the LMF 570. The LPP messages may be exchanged between UE 504 and the LMF 570 via the UE's 504 serving base station (illustrated as a serving gNB 502) and a core network (not shown). The LPP procedure 500 may be used to position the UE 504 in order to support various location-related services, such as navigation for UE 504 (or for the user of UE 504), or for routing, or for provision of an accurate location to a public safety answering point (PSAP) in association with an emergency call from UE 504 to a PSAP, or for some other reason. The LPP procedure 500 may also be referred to as a positioning session, and there may be multiple positioning sessions for different types of positioning methods (e.g., downlink time difference of arrival (DL-TDOA), round-trip-time (RTT), enhanced cell identity (E-CID), etc.).

Initially, the UE 504 may receive a request for its positioning capabilities from the LMF 570 at stage 510 (e.g., an LPP Request Capabilities message). At stage 520, the UE 504 provides its positioning capabilities to the LMF 570 relative to the LPP protocol by sending an LPP Provide Capabilities message to LMF 570 indicating the position methods and features of these position methods that are supported by the UE 504 using LPP. The capabilities indicated in the LPP Provide Capabilities message may, in some aspects, indicate the type of positioning the UE 504 supports (e.g., DL-TDOA, RTT, E-CID, etc.) and may indicate the capabilities of the UE 504 to support those types of positioning.

Upon reception of the LPP Provide Capabilities message, at stage 520, the LMF 570 determines to use a particular type of positioning method (e.g., DL-TDOA, RTT, E-CID, etc.) based on the indicated type(s) of positioning the UE 504 supports and determines a set of one or more transmission-reception points (TRPs) from which the UE 504 is to measure downlink positioning reference signals or towards which the UE 504 is to transmit uplink positioning reference signals. At stage 530, the LMF 570 sends an LPP Provide Assistance Data message to the UE 504 identifying the set of TRPs.

In some implementations, the LPP Provide Assistance Data message at stage 530 may be sent by the LMF 570 to the UE 504 in response to an LPP Request Assistance Data message sent by the UE 504 to the LMF 570 (not shown in FIG. 5). An LPP Request Assistance Data message may include an identifier of the UE's 504 serving TRP and a request for the positioning reference signal (PRS) configuration of neighboring TRPs.

At stage 540, the LMF 570 sends a request for location information to the UE 504. The request may be an LPP Request Location Information message. This message usually includes information elements defining the location information type, desired accuracy of the location estimate, and response time (i.e., desired latency). Note that a low latency requirement allows for a longer response time while a high latency requirement requires a shorter response time. However, a long response time is referred to as high latency and a short response time is referred to as low latency.

Note that in some implementations, the LPP Provide Assistance Data message sent at stage 530 may be sent after the LPP Request Location Information message at 540 if, for example, the UE 504 sends a request for assistance data to LMF 570 (e.g., in an LPP Request Assistance Data message, not shown in FIG. 5) after receiving the request for location information at stage 540.

At stage 550, the UE 504 utilizes the assistance information received at stage 530 and any additional data (e.g., a desired location accuracy or a maximum response time) received at stage 540 to perform positioning operations (e.g., measurements of DL-PRS, transmission of UL-PRS, etc.) for the selected positioning method.

At stage 560, the UE 504 may send an LPP Provide Location Information message to the LMF 570 conveying the results of any measurements that were obtained at stage 550 (e.g., time of arrival (ToA), reference signal time difference (RSTD), reception-to-transmission (Rx-Tx), etc.) and before or when any maximum response time has expired (e.g., a maximum response time provided by the LMF 570 at stage 540). The LPP Provide Location Information message at stage 560 may also include the time (or times) at which the positioning measurements were obtained and the identity of the TRP(s) from which the positioning measurements were obtained. Note that the time between the request for location information at 540 and the response at 560 is the "response time" and indicates the latency of the positioning session.

The LMF 570 computes an estimated location of the UE 504 using the appropriate positioning techniques (e.g., DL-TDOA, RTT, E-CID, etc.) based, at least in part, on measurements received in the LPP Provide Location Information message at stage 560.

A UE is expected to report one or more measurement instances (of RSTD, downlink RSRP, and/or UE Rx-Tx time difference measurements) in a single measurement report (e.g., in the LPP Provide Location Information message at stage 560) to the location server for UE-assisted positioning (there is no such reporting for UE-based positioning). Each UE measurement instance can be configured with 'N' (including N=1) instances of a DL-PRS resource set. Similarly, a TRP is expected to report one or more measurement instances (of relative ToA (RTOA), uplink RSRP, and/or base station Tx-Rx time difference measurements) in a single measurement report to the location server (e.g., via NR positioning protocol type A (NRPPa)). Each measurement instance is reported with its own timestamp, and the measurement instances may be within a (configured) measurement window. Each TRP measurement instance can be configured with 'M' (including M=1) SRS measurement time occasions. Note that a measurement instance refers to one or more measurements, which can either be the same or different types, and which are obtained from the same DL-PRS resource(s) or the same SRS resource(s).

The following definitions are used for the purpose of describing internal timing errors:
Transmit (Tx) timing error: From a signal transmission perspective, there is a time delay from the time when the digital signal is generated at the baseband to the time when the RF signal is transmitted from the Tx antenna. For supporting positioning, the UE/TRP may implement an internal calibration/compensation of the Tx time delay for the transmission of the DL-PRS/SRS, which may also include the calibration/compensation of the relative time delay between different RF chains in the same UE/TRP. The compensation may also consider the offset of the Tx antenna phase center to the physical antenna center. However, the calibration may not be perfect. The remaining Tx time delay after the calibration, or the uncalibrated Tx time delay is defined as the "Tx timing error."

Receive (Rx) timing error: From a signal reception perspective, there is a time delay from the time when the RF signal arrives at the Rx antenna to the time when the signal is digitized and time-stamped at the baseband. For supporting positioning, the UE/TRP may implement an internal calibration/compensation of the Rx time delay before it reports the measurements that are obtained from the DL-PRS/SRS, which may also include the calibration/compensation of the relative time delay between different RF chains in the same UE/TRP. The compensation may also consider the offset of the Rx antenna phase center to the physical antenna center. However, the calibration may not be perfect. The remaining Rx time delay after the calibration, or the uncalibrated Rx time delay, is defined as the "Rx timing error."

UE Tx timing error group (TEG): A UE Tx TEG (or TxTEG) is associated with the transmissions of one or more SRS resources for the positioning purpose, which have the Tx timing errors within a certain margin.

TRP Tx TEG: A TRP Tx TEG (or TxTEG) is associated with the transmissions of one or more DL-PRS resources, which have the Tx timing errors within a certain margin.

UE Rx TEG: A UE Rx TEG (or RxTEG) is associated with one or more downlink measurements, which have the Rx timing errors within a certain margin.

TRP Rx TEG: A TRP Rx TEG (or RxTEG) is associated with one or more uplink measurements, which have the Rx timing errors within a margin.

UE Rx-Tx TEG: A UE Rx-Tx TEG (or RxTxTEG) is associated with one or more UE Rx-Tx time difference measurements, and one or more SRS resources for the positioning purpose, which have the Rx timing errors plus Tx timing errors within a certain margin.

TRP Rx-Tx TEG: A TRP Rx-Tx TEG (or RxTxTEG) is associated with one or more TRP Rx-Tx time difference measurements and one or more DL-PRS resources, which have the Rx timing errors plus Tx timing errors within a certain margin.

An RTT-based positioning technique has been introduced, referred to as "differential RTT," that allows for looser requirements on both inter-base station synchronization and group delay calibration, resulting in lower complexity and device cost. The "group delay" is generally the delay between a measured transmission or reception time of a signal and the actual time the signal is transmitted or received. The group delay includes a hardware group delay, a group delay attributable to software/firmware, or both. More specifically, although software and/or firmware may contribute to group delay, the group delay is primarily due to internal hardware delays between the baseband and the antenna(s) of the transmitter/receiver. The term "group delay" is used to emphasize that the delay is caused by elements in the Tx/Rx chain, which may include filters, and may result in a delay that is a function of frequency, RAT, carrier aggregation (CA), component carrier (CC), and so on.

Broadly, the differential RTT based positioning procedure may be viewed as a technique to determine a location of the UE based on differences of RTTs among a plurality of RTTs. For example, with two base stations, traditional RTT narrows the location of the UE to the intersection of two circles, but this approach only narrows the location of the UE to a hyperbola - at least two more base stations are needed to further narrow the UE's location. Instead, for differential RTT, by using only the differences among the RTTs, the advantage of OTDOA can be obtained, specifically, only the differences in group delay among the involved base stations matters, not their absolute group delay.

At the positioning entity (e.g., a positioning engine at the UE, a location server, etc.), the positioning entity receives the RTT measurements as with a traditional RTT procedure. If the measurements have already accounted for group delays, the positioning entity performs traditional RTT positioning (i.e., intersecting circles). Otherwise, the positioning entity performs differential RTT positioning. However, if the positioning entity is in the network (e.g., gNB, LMF, SLP etc.), it does not know if the group delay has been accounted for, which motivates new signaling.

Regarding potential new signaling to a location server, the UE's RTT measurement report (e.g., in the LPP Provide Location Information message at stage 560) can include a new indication to inform the positioning entity whether it accounted for group delay. The UE can also indicate whether the same group delay is expected as for a report for an RTT with another base station (to enable differential RTT). In one option, this may be included only if a "group delay has not been accounted for" indication. Alternatively, an indication of the group delay difference and uncertainty therein can be provided. As yet another alternative, the UE can indicate its Tx and/or Rx configuration (e.g., Tx and/or Rx beams, transmit power used, bandwidth, etc.). The same configuration can be associated with the same group delay. Note that some configurations (such as bandwidth) may be known to the network and would not need to be reported. Base station may also signal (e.g., in LPP type A (LPPa) or NR positioning protocol type A (NRPPa)) similar information related to their group delay accounting.

If the above signaling is not used, the location server can use its knowledge of the Tx/Rx configuration (such as bandwidth, beams, etc.) of both the UE and the involved bases stations to determine, as best it can, which pairs of RTTs can be used for differential measurements. For example, the location server may determine this information from the involved base stations using LPPa or NRPPa.

Techniques have been introduced for the classification of measurement groups. In order to report these calibration errors, three groups can be used. The first group is a "same timing Rx measurement group," abbreviated "RMG," or a "same RxTEG group." For this group, the UE reports, together with the measurement (e.g., Rx-Tx time difference, RSTD, ToA, etc.), to which RMG the measurement belongs. The UE can have multiple RMGs depending on its hardware capabilities and calibration errors (e.g., RMG1, RMG2, ... RMGn). All the measurement reporting under the same RMG are expected to have the same Rx timing or Rx timing error in the measurement. For measurements belonging to different RMGs, the location server cannot assume that the Rx timing or Rx timing error is the same.

The second group is a "same timing Tx measurement group," abbreviated "TMG," or a "same TxTEG group." These groups are used to report Tx-specific measurements, such as SRS UL-ToA, which uplink path or panel the UE used to transmit the SRS, etc. The UE can have multiple TMGs depending on its hardware capabilities and calibration errors (e.g., TMG1, TMG2, ... TMGn). For all the measurements reported under the same TMG, the location server may assume that the same Tx timing error is involved. Measurements belonging to different TMGs will have different UE group delay or calibration error. For measurements belonging to different RMGs, the location server cannot assume that the Tx timing or Tx timing error is the same.

The third group is a "same group delay Rx-Tx measurement group," abbreviated "RTMG," or a "same RxTxTEG group." These groups are used to report Rx-Tx-specific measurements (i.e., measurements that involve both reception and transmission), such as multi-cell RTT measurements. The UE can have multiple RTMGs depending on its hardware capabilities and calibration errors (e.g., RTMG1, RTMG2, ... RTMGn). All the measurement reporting under the same RTMG are expected to have the same UE group delay or group delay calibration error. For measurements belonging to different RTMGs, the location server cannot assume that the same UE group delay or group delay calibration error is applicable.

The following table summarizes the types of UE measurements that can be associated with the measurement groups defined above.

**Table 1**

| **Measurement Group** | **Measurement** |
|---|---|
| RMG/RxTEG | DL-TDOA, DL-RSTD (PRS), UE AoA |
| TMG/TxTEG | UL-TDOA, UL-RSTD (SRS), UE AoD |
| RTMG/RxTxTEG | Multi-cell RTT |

In a measurement session, the UE needs to report the various measurements to the location server (e.g., in the LPP Provide Location Information message at stage 560). For example, the reported measurements (also referred to as "measurement objects") may include one or more "nr-DL-PRS-RSRP-Result," "nr-DL-PRS-RSRQ-Result," "nr-DL-TDOA-AdditionalMeasurements," "nr-Multi-RTT-AdditionalMeasurements-r16," "nr-DL-PRS-RxBeamIndex-r16," and/or "nr-DL-AoD-AdditionalMeasurements-r16" measurement objects.

The measurement group is fixed with respect to the measurement object (as shown in Table 1). For each measurement report, the UE can add a measurement type group identifier (ID). There may be two group IDs defined, an optional "nr-UE-measurement-group-ref" information element (IE) and an optional "nr-UE-measurement-group" IE. Each group ID IE may have a maximum of eight groups. The "nr-UE-measurement-group-ref" IE indicates the group ID for the reference cell. The "nr-UE-measurement-group" IE indicates the group ID for the measured cell.

The present disclosure defines batch reporting as follows. A device (UE or base station) reports one or more measurement instances (of RSTD, DL-RSRP, Rx-Tx time difference, and/or the like) to the location server in a single measurement report. A measurement instance refers to two or more measurements, which can either be the same or different types of measurements, that are obtained from the same reference signal resource(s) (e.g., PRS, SRS) and are each associated with their own timestamps. That is, a batch is a group of two or more measurements of the same resource(s) at different times (i.e., having different timestamps). Currently, while a measurement report may include multiple measurements, it only includes one measurement per resource.

In batch reporting, the TEG information (e.g., TEG ID, uncertainty value, TEG timing error difference) may have time-domain consistency (1) within each single sub-report of each batch report, (2) across all the sub-reports of each batch report, or (3) across multiple batch reports. The TEG may be UE Tx TEG, TRP Tx TEG, UE Rx TEG, TRP Rx TEG, UE Rx-Tx TEG, or TRP Rx-Tx TEG. "Consistency" means that two measurements that are associated with the same TEG information can be inferred to have the same TEG information only within each sub-report of a batch report (the first option), or across all sub-reports of a batch report (the second option), or across multiple batch reports (the third option).

For example, for the first option, if two measurements are tagged with TEG-ID=1, and they are in different sub-reports, then it does not mean that they have the same timing error, since the two measurements are in different sub-reports. As another example, for the second option, if two measurements are tagged with TEG-ID=1 and they are in different sub-reports but the same batch report, then it does mean that they have the same timing error, since the two measurements are in the same batch report. As yet another example, or the third option, if two measurements are tagged with TEG-ID=1 and they are in different batch reports, then it does mean that they have the same timing error, based on some additional information described below.

The TEG information may also have frequency domain consistency if the measurements are derived on the same component carrier, frequency band, positioning frequency layer, ARFCN, or frequency range value. Thus, for two measurements to be considered as having the same error, they would have the same TEG and component carrier, frequency band, positioning frequency layer, ARFCN, or frequency range value.

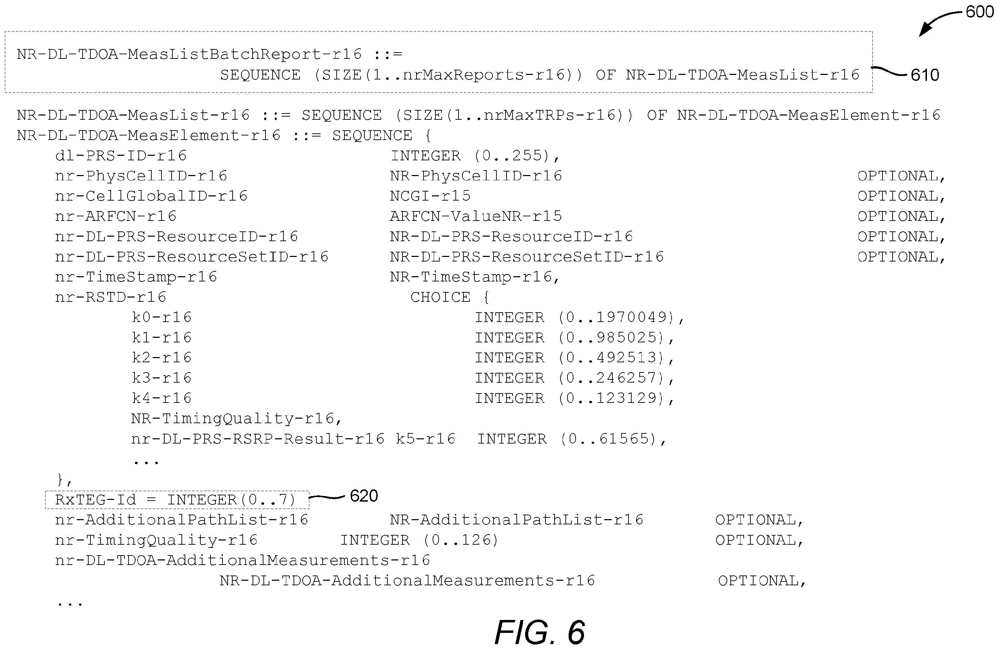

FIG. 6 illustrates an example batch measurement report structure 600 for DL-TDOA measurements, according to aspects of the disclosure. The batch measurement report structure 600 includes an "NR-DL-TDOA-MeasListBatchReport-r16" IE 610, which indicates that the batch measurement report structure 600 is for a batch measurement report. The "NR-DL-TDOA-MeasListBatchReport-r16" IE 610 may include from '1' to 'nrMaxReports-r16' "NR-DL-TDOA-MeasList-r16" IEs. Each "NR-DL-TDOA-MeasList-r16" IE may include from '1' to 'nrMaxTRPs-r16' (e.g., four) "NR-DL-TDOA-MeasElement-r16" IEs. Each "NR-DL-TDOA-MeasElement-r16" IE may include various quantities related to the measurement, such as "dl-PRS-ID-r16," "nr-PhysCellID-r16," and "nr-TimeStamp-r16," plus the actual RSTD measurements (i.e., "nr-RSTD-r16").

The "NR-DL-TDOA-MeasListBatchReport-r16" IE 610 also includes an "RxTEG-Id" parameter 620 that may have a value from '0' to '7' (for the maximum of eight group IDs). The "RxTEG-Id" parameter is the TEG-ID described above, here identifying a UE Rx TEG. In the example of FIG. 6, the "RxTEG-Id" parameter is associated with the "NR-DL-TDOA-MeasElement-r16" IE, making it specific to a sub-report (here, the "NR-DL-TDOA-MeasElement-r16" IE) within a batch report (here, the "NR-DL-TDOA-MeasListBatchReport-r16" IE 610). As such, the "RxTEG-Id" parameter is an example of the first option described above.

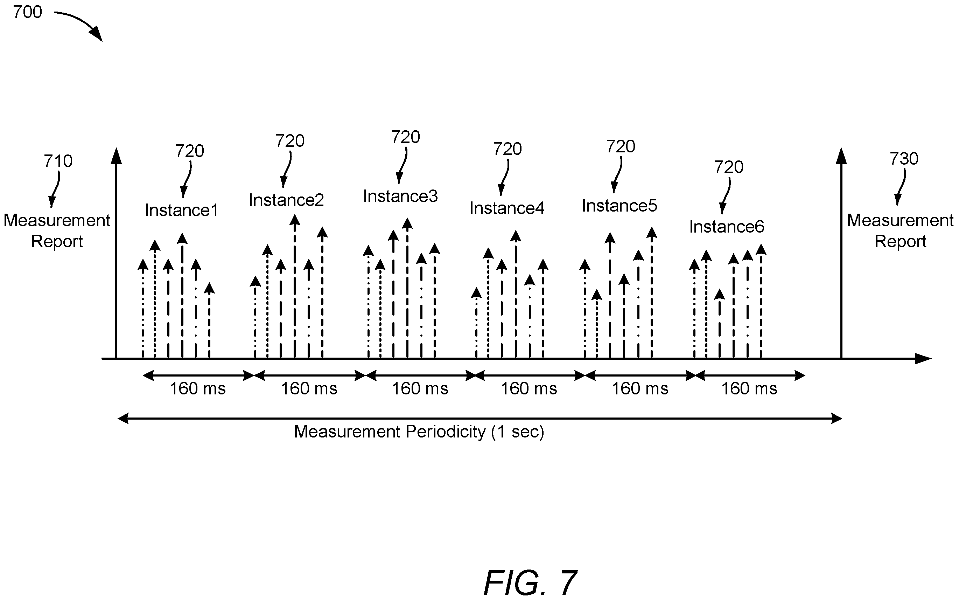

**FIG. 7** is a diagram 700 illustrating an example timeline for measurement reporting, according to aspects of the disclosure. In FIG. 7, time is represented horizontally and signal strength is represented vertically. In the example of FIG. 7, the UE is configured to transmit a measurement report every one second (1 sec), and FIG. 7 illustrates the time period between a first measurement report 710 and a second measurement report 730. Within the measurement report periodicity, the UE is configured with six measurement instances 720 of a downlink reference signal (e.g., a PRS instance). Each measurement instance 720 comprises multiple (e.g., six) reference signal resources (e.g., PRS resources), as illustrated by the vertical arrows. The relative signal strength of these resources is represented by the height of the vertical arrows. Each vertical arrow has a particular dash pattern, which identifies that same resource across measurement instances 720. That is, each reference signal resource in a measurement instance 720 is repeated across all measurement instances 720.

The UE may perform the same or different type of measurement (e.g., ToA, RSRP, RSTD, etc.) of the reference signal resources in each measurement instance 720. Because the US is performing measurements of the same reference signal resources across multiple measurement instances 720, the UE can report the measurements in a batch measurement report (e.g., using the measurement report structure 600 illustrated in FIG. 6). That is, the measurement report 730 would be a batch measurement report. The measurements of each measurement instance 720 may correspond to a sub-report of the measurement report 730.

Referring to the types of batch reporting described above, if the TEG information (e.g., TEG ID, uncertainty value, TEG timing error difference) has time-domain consistency within each single sub-report of each batch report (the first option), then the TEG information would have time consistency only within a measurement instance 720. If the TEG information has time-domain consistency across all the sub-reports of each batch report (the second option), then the TEG information would have time consistency across all measurement instances 720 of a measurement periodicity. Alternatively, the first three measurement instances 720 may have a first TEG (and therefore TEG-ID) and the second three instances 720 may have a second TEG (and therefore a different TEG-ID). If the TEG information has time-domain consistency across multiple batch reports (the third option), then the TEG information would have time consistency across multiple measurement reports (e.g., measurement reports 710 and 730). That is, the TEG information would be the same for a reference signal resource across multiple measurement reports.

In an aspect, explicit signaling can be included inside a sub-report, or a batch report, to indicate whether one or more or all TEGs are "refreshed." That is, when the reporting device (e.g., UE or base station) sends this explicit signaling, it means that the TEG information has changed, or that one of the three consistency options described above have been chosen. The change indication may be included in or separate from the associated measurement report.

In an aspect, the device may send a "TimingGroupInformation" message (unsolicited or on demand based on a request from the location server) that includes the TEG information and its validity and/or consistency option. The message may include a timestamp or time interval for which the timing group information in the TimingGroupInformation message is valid. The TimingGroupInformation message may be included in or separate from the associated measurement report.

In an aspect, certain events may break the time domain consistency of the TEGs. For example, the UE's discontinuous reception (DRX) cycle may break the time domain consistency of the TEGs. As another example, the RRC transitioning between CONNECTED and IDLE and/or INACTIVE states may break the time domain consistency of the TEGs. As yet another example, the start or end of a positioning session may break the time domain consistency of the TEGs.

Thus, according to the above disclosure, when a UE (or base station) reports two or more measurements that have the same TEG-ID, the difference between the timing errors of the two or more measurements can be assumed to be less than a threshold when the following conditions are satisfied: (1) the two or more measurements are in the same sub-report of a measurement report, (2) the two or more measurements are in the same batch report, (3) the two or more measurements are of reference signal resources on the same component carrier, frequency band, positioning frequency layer, ARFCN, or frequency range, (4) the UE is in RRC CONNECTED state or the UE does not change RRC state during the measurement periodicity, (5) the UE does not enter into DRX inactive time during the measurement periodicity, (6) the UE does not change its active BWP during the measurement periodicity, (7) the two or more measurements are derived within the same measurement gap (a configured period of time during which the UE does not expect to receive transmissions from, or transmit to, the serving cell in order to perform measurements of other cells), and (8) the UE may perform antenna switching between the measurements (if the UE changes the antenna, then the group delay from baseband to the antenna may be different for the different measurements).

In an aspect, if a UE receives a configuration of a time-domain measurement window (also known as a requested location time, a measurement time, or a location time window), the positioning reference signals that are being measured should be those that are transmitted within a configured time-domain window. If there are no reference signals to measure within the configured time-domain window, or if the number of reference signals or instances of the reference signal(s) within the configured time-domain window is lower than a threshold, then, in addition to the reference signals within the configured time-domain window (if any), the UE may be expected to prioritize the measurement of PRS resources, PRS resource sets, frequency layers, and/or TRPs that are (1) closest to the start of the configured time-domain measurement window and before the start of the configured time-domain window, or (2) closest to the end of the configured time-domain measurement window and after the configured time-domain window. The UE may not be expected to measure any PRS resource(s) 'X' ms, slots, subframes, etc. before the start of (for the first option) or after the end of (for the second option) the configured time-domain window, where the value of 'X' may also be configured to the UE and/or a reported UE capability.

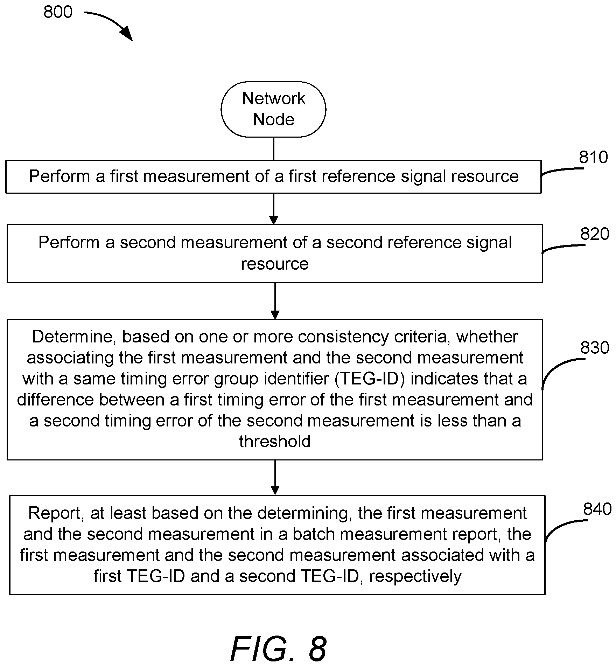

**FIG. 8** illustrates an example method 800 of wireless positioning, according to aspects of the disclosure. In an aspect, method 800 may be performed by a network node (e.g., any of the UEs or base stations described herein).

At 810, the network node performs a first measurement (e.g., ToA, RSRP, RSTD, etc.) of a first reference signal resource (e.g., PRS where the network node is a UE, SRS where the network node is a base station) (at a first time during a first measurement instance (e.g., a first instance 720) within a measurement periodicity). In an aspect, where the network node is a UE, operation 810 may be performed by WWAN transceiver 310, processing system 332, memory component 340, and/or positioning component 342, any or all of which may be considered means for performing this operation. Where the network node is a base station, operation 810 may be performed by WWAN transceiver 350, processing system 384, memory component 386, and/or positioning component 388, any or all of which may be considered means for performing this operation.

At 820, the network node performs a second measurement (e.g., ToA, RSRP, RSTD, etc.) of a second reference signal resource (the same or different as the first reference signal resource) (at a second time during a second measurement instance (e.g., a second instance 720) within the measurement periodicity). In an aspect, where the network node is a UE, operation 820 may be performed by WWAN transceiver 310, processing system 332, memory component 340, and/or positioning component 342, any or all of which may be considered means for performing this operation. Where the network node is a base station, operation 820 may be performed by WWAN transceiver 350, processing system 384, memory component 386, and/or positioning component 388, any or all of which may be considered means for performing this operation.

At 830, the network node determines, based on one or more consistency criteria, whether associating the first measurement and the second measurement with a same TEG-ID indicates that a difference between a first timing error of the first measurement and a second timing error of the second measurement is less than a threshold. In an aspect, where the network node is a UE, operation 830 may be performed by WWAN transceiver 310, processing system 332, memory component 340, and/or positioning component 342, any or all of which may be considered means for performing this operation. Where the network node is a base station, operation 830 may be performed by WWAN transceiver 350, processing system 384, memory component 386, and/or positioning component 388, any or all of which may be considered means for performing this operation.

At 840, the network node reports, at least based on the determining at 830, the first measurement and the second measurement in a batch measurement report in a batch measurement report, the first measurement and the second measurement associated with a first TEG-ID and a second TEG-ID, respectively. In an aspect, where the network node is a UE, operation 840 may be performed by WWAN transceiver 310, processing system 332, memory component 340, and/or positioning component 342, any or all of which may be considered means for performing this operation. Where the network node is a base station, operation 840 may be performed by WWAN transceiver 350, processing system 384, memory component 386, and/or positioning component 388, any or all of which may be considered means for performing this operation.

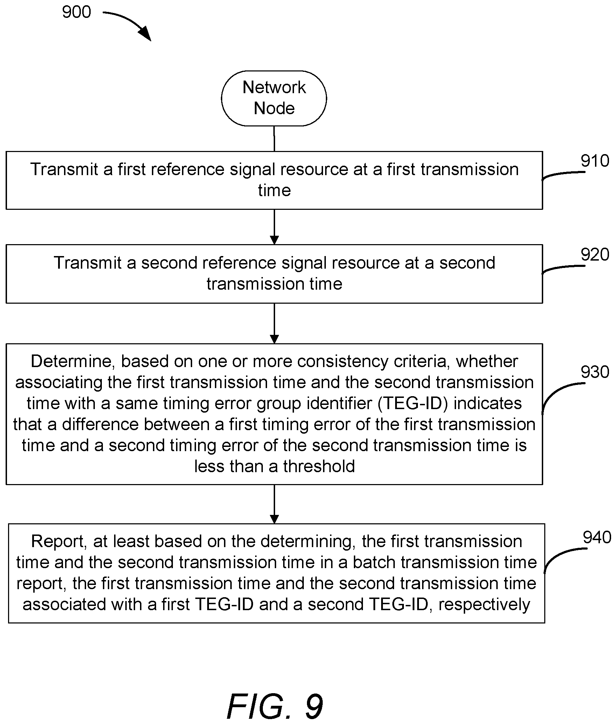

**FIG. 9** illustrates an example method 900 of wireless positioning, according to aspects of the disclosure. In an aspect, method 900 may be performed by a network node (e.g., any of the UEs or base stations described herein).

At 910, the network node transmits a first reference signal resource (e.g., PRS where the network node is a UE, SRS where the network node is a base station) at a first transmission time. In an aspect, where the network node is a UE, operation 910 may be performed by WWAN transceiver 310, processing system 332, memory component 340, and/or positioning component 342, any or all of which may be considered means for performing this operation. Where the network node is a base station, operation 910 may be performed by WWAN transceiver 350, processing system 384, memory component 386, and/or positioning component 388, any or all of which may be considered means for performing this operation.

At 920, the network node transmits a second reference signal resource (the same or different as the first reference signal resource) at a second transmission time. In an aspect, where the network node is a UE, operation 920 may be performed by WWAN transceiver 310, processing system 332, memory component 340, and/or positioning component 342, any or all of which may be considered means for performing this operation. Where the network node is a base station, operation 920 may be performed by WWAN transceiver 350, processing system 384, memory component 386, and/or positioning component 388, any or all of which may be considered means for performing this operation.

At 930, the network node determines, based on one or more consistency criteria, whether associating the first transmission time and the second transmission time with a same TEG-ID indicates that a difference between a first timing error of the first transmission time and a second timing error of the second transmission time is less than a threshold. In an aspect, where the network node is a UE, operation 930 may be performed by WWAN transceiver 310, processing system 332, memory component 340, and/or positioning component 342, any or all of which may be considered means for performing this operation. Where the network node is a base station, operation 930 may be performed by WWAN transceiver 350, processing system 384, memory component 386, and/or positioning component 388, any or all of which may be considered means for performing this operation.

At 940, the network node reports, at least based on the determining at 930, the first transmission time and the second transmission time in a batch transmission time report, the first transmission time and the second transmission time associated with a first TEG-ID and a second TEG-ID, respectively. In an aspect, where the network node is a UE, operation 940 may be performed by WWAN transceiver 310, processing system 332, memory component 340, and/or positioning component 342, any or all of which may be considered means for performing this operation. Where the network node is a base station, operation 940 may be performed by WWAN transceiver 350, processing system 384, memory component 386, and/or positioning component 388, any or all of which may be considered means for performing this operation.

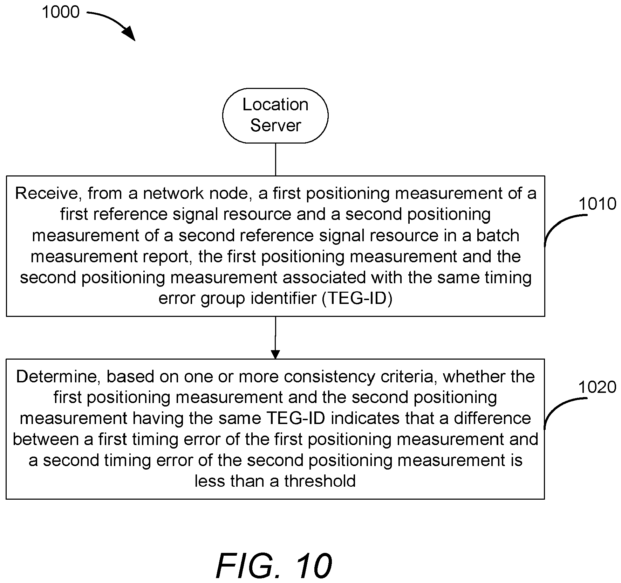

**FIG. 10** illustrates an example method 1000 of communication, according to aspects of the disclosure. In an aspect, method 1000 may be performed by a location server (e.g., location server 230, LMF 270, SLP 272).

At 1010, the location server receives, from a network node (e.g., any of the UEs or base stations described herein), a first positioning measurement of a first reference signal resource (e.g., PRS where the network node is a UE, SRS where the network node is a base station) and a second positioning measurement of a second reference signal resource in a batch measurement report, the first positioning measurement and the second positioning measurement associated with the same TEG-ID. In an aspect, operation 1010 may be performed by network interface(s) 390, processing system 394, memory component 396, and/or positioning component 398, any or all of which may be considered means for performing this operation.

At 1020, the location server determines, based on one or more consistency criteria, whether the first positioning measurement and the second positioning measurement having the same TEG-ID indicates that a difference between a first timing error of the first positioning measurement and a second timing error of the second positioning measurement is less than a threshold. In an aspect, operation 1020 may be performed by network interface(s) 390, processing system 394, memory component 396, and/or positioning component 398, any or all of which may be considered means for performing this operation.

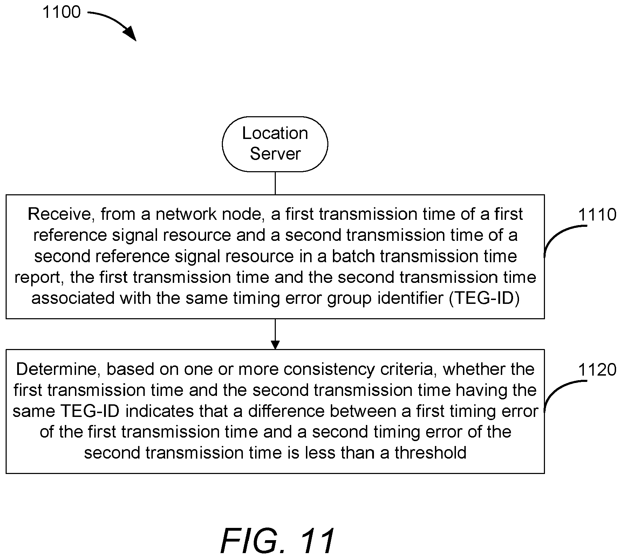

**FIG. 11** illustrates an example method 1100 of communication, according to aspects of the disclosure. In an aspect, method 1100 may be performed by a location server (e.g., location server 230, LMF 270, SLP 272).

At 1110, the location server receives, from a network node (e.g., any of the UEs or base stations described herein), a first transmission time of a first reference signal resource (e.g., PRS where the network node is a UE, SRS where the network node is a base station) and a second transmission time of a second reference signal resource in a batch transmission time report, the first transmission time and the second transmission time associated with the same TEG-ID. In an aspect, operation 1110 may be performed by network interface(s) 390, processing system 394, memory component 396, and/or positioning component 398, any or all of which may be considered means for performing this operation.

At 1120, the location server determines, based on one or more consistency criteria, whether the first transmission time and the second transmission time having the same TEG-ID indicates that a difference between a first timing error of the first transmission time and a second timing error of the second transmission time is less than a threshold. In an aspect, operation 1120 may be performed by network interface(s) 390, processing system 394, memory component 396, and/or positioning component 398, any or all of which may be considered means for performing this operation.

As will be appreciated, a technical advantage of the methods 800 to 1100 is the batch reporting of positioning measurements during a positioning session.

In the detailed description above it can be seen that different features are grouped together in examples. This manner of disclosure should not be understood as an intention that the example clauses have more features than are explicitly mentioned in each clause. Rather, the various aspects of the disclosure may include fewer than all features of an individual example clause disclosed. Therefore, the following clauses should hereby be deemed to be incorporated in the description, wherein each clause by itself can stand as a separate example. Although each dependent clause can refer in the clauses to a specific combination with one of the other clauses, the aspect(s) of that dependent clause are not limited to the specific combination. It will be appreciated that other example clauses can also include a combination of the dependent clause aspect(s) with the subject matter of any other dependent clause or independent clause or a combination of any feature with other dependent and independent clauses. The various aspects disclosed herein expressly include these combinations, unless it is explicitly expressed or can be readily inferred that a specific combination is not intended (e.g., contradictory aspects, such as defining an element as both an insulator and a conductor). Furthermore, it is also intended that aspects of a clause can be included in any other independent clause, even if the clause is not directly dependent on the independent clause.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a general purpose processor, a digital signal processor (DSP), an ASIC, a field-programable gate array (FPGA), or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, for example, a combination of a DSP and a microprocessor, a plurality of microprocessors, one or more microprocessors in conjunction with a DSP core, or any other such configuration.

The methods, sequences and/or algorithms described in connection with the aspects disclosed herein may be embodied directly in hardware, in a software module executed by a processor, or in a combination of the two. A software module may reside in random access memory (RAM), flash memory, read-only memory (ROM), erasable programmable ROM (EPROM), electrically erasable programmable ROM (EEPROM), registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more example aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

While the foregoing disclosure shows illustrative aspects of the disclosure, it should be noted that various changes and modifications could be made herein without departing from the scope of the disclosure as defined by the appended claims. The functions, steps and/or actions of the method claims in accordance with the aspects of the disclosure described herein need not be performed in any particular order. Furthermore, although elements of the disclosure may be described or claimed in the singular, the plural is contemplated unless limitation to the singular is explicitly stated.

## Claims

1. A method of wireless positioning performed by a network node (102), comprising:
performing a first measurement (720) of a first reference signal resource;
performing a second measurement of a second reference signal resource;
determining, based on one or more consistency criteria, whether associating the first measurement (720) and the second measurement with a same timing error group identifier, TEG-ID, indicates that a difference between a first timing error of the first measurement (720) and a second timing error of the second measurement is less than a threshold;
reporting, at least based on the determining, the first measurement (720) and the second measurement in a batch measurement report (710), the first measurement (720) and the second measurement associated with a first TEG-ID and a second TEG-ID, respectively;
wherein the first TEG-ID and the second TEG-ID being the same TEG-ID indicates that the difference between the first timing error of the first measurement (720) and the second timing error of the second measurement is less than the threshold:
only within the same sub-report of the batch measurement report (710),
across all sub-reports of the batch measurement report (710), or
across multiple batch measurement reports (710, 730), including the batch measurement report (710).

2. The method of claim 1, wherein the one or more consistency criteria include whether the first TEG-ID and the second TEG-ID are in a same sub-report of the batch measurement report.

3. The method of claim 1, wherein the one or more consistency criteria include whether the first TEG-ID and the second TEG-ID are reported in the same batch measurement report.

4. The method of claim 1, wherein the one or more consistency criteria include whether the first reference signal resource and the second reference signal resource are on the same component carrier, frequency band, positioning frequency layer, absolute radio-frequency channel number, ARFCN, or frequency range.

5. The method of claim 1, wherein the one or more consistency criteria include whether the network node is in a radio resource control, RRC, CONNECTED state or does not change RRC state between the first measurement and the second measurement.

6. The method of claim 1, wherein the one or more consistency criteria include whether the network node does not enter into discontinuous reception, DRX, mode inactive time between the first measurement and the second measurement.

7. The method of claim 1, wherein the one or more consistency criteria include whether the network node does not change its active bandwidth part, BWP, between the first measurement and the second measurement.

8. The method of claim 1, wherein the one or more consistency criteria include whether the first measurement and the second measurement are derived within the same measurement gap.

9. The method of claim 1, wherein the one or more consistency criteria include whether the network node performs antenna switching between the first measurement and the second measurement.

10. The method of claim 1, further comprising:
receiving a configuration of a time-domain measurement window during which to measure positioning reference signals; and
based on a number of positioning reference signals within the time-domain measurement window being less than a threshold, prioritizing measurements of positioning reference signals transmitted within a first threshold period of time before the time-domain measurement window or transmitted within a second threshold period of time after the time-domain measurement window,
wherein the first reference signal resource, the second reference signal resource, or both are measured within the first threshold period of time before the time-domain measurement window or within the second threshold period of time after the time-domain measurement window; and optionally further comprising:
receiving a configuration of the first threshold period of time and the second threshold period of time.

11. The method of claim 1, further comprising:
transmitting an indication that TEG information associated with the first TEG-ID has changed;
transmitting a time interval during which TEG information associated with the first TEG-ID is valid; or
any combination thereof; and optionally
wherein the TEG information comprises the first TEG-ID, an uncertainty value, and the difference between the first timing error and the second timing error.

12. A method of wireless positioning performed by a network node (104), comprising:
transmitting a first reference signal resource at a first transmission time;
transmitting a second reference signal resource at a second transmission time;
determining, based on one or more consistency criteria, whether associating the first transmission time and the second transmission time with a same timing error group identifier, TEG-ID, indicates that a difference between a first timing error of the first transmission time and a second timing error of the second transmission time is less than a threshold; and
reporting, at least based on the determining, the first transmission time and the second transmission time in a batch transmission time report (710), the first transmission time and the second transmission time associated with a first TEG-ID and a second TEG-ID, respectively;
wherein the first TEG-ID and the second TEG-ID being the same TEG-ID indicates that the difference between the first timing error of the first transmission time and the second timing error of the second transmission time is less than the threshold:
only within the same sub-report of the batch transmission time report (710),
across all sub-reports of the batch transmission time report (710), or
across multiple batch transmission time reports (710, 730), including the batch transmission time report (710).

13. A method of communication performed by a location server (230), comprising:
receiving, from a network node (102), a first positioning measurement (720) of a first reference signal resource and a second positioning measurement of a second reference signal resource in a batch measurement report (710), the first positioning measurement (720) and the second positioning measurement associated with the same timing error group identifier, TEG-ID; and
determining, based on one or more consistency criteria, whether the first positioning measurement (720) and the second positioning measurement having the same TEG-ID indicates that a difference between a first timing error of the first positioning measurement (720) and a second timing error of the second positioning measurement is less than a threshold;
wherein the first positioning measurement (720) and the second positioning measurement being associated with the same TEG-ID indicates that the difference between the first timing error of the first positioning measurement (720) and the second time error of the second positioning measurement is less than the threshold:
only within the same sub-report of the batch measurement report (710),
across all sub-reports of the batch measurement report (710), or
across multiple batch measurement reports (710, 730), including the batch measurement report (710).

14. A method of communication performed by a location server (230), comprising:
receiving, from a network node (102), a first transmission time of a first reference signal resource and a second transmission time of a second reference signal resource in a batch transmission time report (710), the first transmission time and the second transmission time associated with the same timing error group identifier, TEG-ID,; and
determining, based on one or more consistency criteria, whether the first transmission time and the second transmission time having the same TEG-ID indicates that a difference between a first timing error of the first transmission time and a second timing error of the second transmission time is less than a threshold;
wherein the first transmission time and the second transmission time being the same TEG-ID indicates that the difference between the first timing error of the first transmission time and the second timing error of the second transmission time is less than the threshold:
only within the same sub-report of the batch transmission time report (710),
across all sub-reports of the batch transmission time report (710), or
across multiple batch transmission time reports (710, 730), including the batch transmission time report (710).

15. A computer program comprising instructions which, when the program is executed by a computing device, cause the computing device to carry out the method of any one of claims 1 to 14.

## Patentansprüche

1. Verfahren zur drahtlosen Positionsbestimmung, durchgeführt von einem Netzwerkknoten (102), das Folgendes beinhaltet:
Durchführen einer ersten Messung (720) einer ersten Referenzsignalressource;
Durchführen einer zweiten Messung einer zweiten Referenzsignalressource;
Feststellen, auf der Basis eines oder mehrerer Konsistenzkriterien, ob das Assoziieren der ersten Messung (720) und der zweiten Messung mit einer selben Zeitfehlergruppenkennung, TEG-ID, anzeigt, dass eine Differenz zwischen einem ersten Zeitfehler der ersten Messung (720) und einem zweiten Zeitfehler der zweiten Messung kleiner als ein Schwellenwert ist;
Melden, zumindest auf der Basis der Feststellung, des ersten Messwerts (720) und des zweiten Messwerts in einem Stapelmessbericht (710), wobei der erste Messwert (720) und der zweite Messwert mit einer ersten TEG-ID bzw. einer zweiten TEG-ID assoziiert sind;
wobei Gleichheit der ersten TEG-ID und der zweiten TEG-ID anzeigt, dass die Differenz zwischen dem ersten Zeitfehler der ersten Messung (720) und dem zweiten Zeitfehler der zweiten Messung kleiner als der Schwellenwert ist:
nur innerhalb desselben Teilberichts des Stapelmessberichts (710),
über alle Teilberichte des Stapelmessberichts (710) hinweg oder
über mehrere Stapelmessberichte (710, 730) hinweg, einschließlich des Stapelmessberichts (710).

2. Verfahren nach Anspruch 1, wobei die ein oder mehreren Konsistenzkriterien beinhalten, ob die erste TEG-ID und die zweite TEG-ID im selben Teilbericht des Stapelmessberichts enthalten sind.

3. Verfahren nach Anspruch 1, wobei die ein oder mehreren Konsistenzkriterien beinhalten, ob die erste TEG-ID und die zweite TEG-ID im selben Stapelmessbericht gemeldet werden.

4. Verfahren nach Anspruch 1, wobei die ein oder mehreren Konsistenzkriterien beinhalten, ob die erste Referenzsignalressource und die zweite Referenzsignalressource auf demselben Komponententräger, demselben Frequenzband, derselben Positionsbestimmungshäufigkeitsschicht, derselben absoluten Funkfrequenzkanalnummer, ARFCN, oder demselben Frequenzbereich liegen.

5. Verfahren nach Anspruch 1, wobei die ein oder mehreren Konsistenzkriterien beinhalten, ob der Netzwerkknoten in einem RRC-(Radio Resource Control)-CONNECTED-Zustand ist oder den RRC-Zustand zwischen der ersten Messung und der zweiten Messung nicht wechselt.

6. Verfahren nach Anspruch 1, wobei die ein oder mehreren Konsistenzkriterien beinhalten, ob der Netzwerkknoten zwischen der ersten Messung und der zweiten Messung in eine DRX-(Discontinuous Reception)-Modus-Inaktivzeit eintritt.

7. Verfahren nach Anspruch 1, wobei die ein oder mehreren Konsistenzkriterien beinhalten, ob der Netzwerkknoten seinen aktiven Bandbreitenteil (BWP) zwischen der ersten Messung und der zweiten Messung ändert.

8. Verfahren nach Anspruch 1, wobei die ein oder mehreren Konsistenzkriterien beinhalten, ob der erste Messwert und der zweite Messwert innerhalb derselben Messlücke abgeleitet werden.

9. Verfahren nach Anspruch 1, wobei die ein oder mehreren Konsistenzkriterien beinhalten, ob der Netzwerkknoten zwischen der ersten Messung und der zweiten Messung eine Antennenumschaltung durchführt.

10. Verfahren nach Anspruch 1, das ferner Folgendes beinhaltet:
Empfangen einer Konfiguration eines Zeitdomänenmessfensters, in dem Positionsreferenzsignale gemessen werden sollen; und
Priorisieren, auf der Basis davon, dass eine Anzahl von Positionsreferenzsignalen innerhalb des Zeitdomänenmessfensters kleiner als ein Schwellenwert ist, von Messungen von Positionsreferenzsignalen, die innerhalb einer ersten Schwellenzeitperiode vor dem Zeitdomänenmessfenster oder innerhalb einer zweiten Schwellenzeitperiode nach dem Zeitdomänenmessfenster übertragen werden,
wobei die erste Referenzsignalressource und/oder die zweite Referenzsignalressource innerhalb der ersten Schwellenzeitperiode vor dem Zeitdomänenmessfenster oder innerhalb der zweiten Schwellenzeitperiode nach dem Zeitdomänenmessfenster gemessen werden; und das ferner optional Folgendes beinhaltet:
Empfangen einer Konfiguration der ersten Schwellenzeitperiode und der zweiten Schwellenzeitperiode.

11. Verfahren nach Anspruch 1, das ferner Folgendes beinhaltet:
Übertragen einer Anzeige, dass sich mit der ersten TEG-ID assoziierte TEG-Informationen geändert haben;
Übertragen eines Zeitintervalls, während dessen mit der ersten TEG-ID assoziierte TEG-Informationen gültig sind; oder
eine beliebige Kombination davon; und wobei optional
die TEG-Informationen die erste TEG-ID, einen Unsicherheitswert und die Differenz zwischen dem ersten Zeitfehler und dem zweiten Zeitfehler umfassen.

12. Verfahren zur drahtlosen Positionsbestimmung, durchgeführt von einem Netzwerkknoten (104), das Folgendes beinhaltet:
Übertragen einer ersten Referenzsignalressource zu einer ersten Übertragungszeit;
Übertragen einer zweiten Referenzsignalressource zu einer zweiten Übertragungszeit;
Feststellen, auf der Basis eines oder mehrerer Konsistenzkriterien, ob das Assoziieren der ersten Übertragungszeit und der zweiten Übertragungszeit mit einer selben Zeitfehlergruppenkennung, TEG-ID, anzeigt, dass eine Differenz zwischen einem ersten Zeitfehler der ersten Übertragungszeit und einem zweiten Zeitfehler der zweiten Übertragungszeit kleiner als ein Schwellenwert ist;
Melden, zumindest auf der Basis der Feststellung, der ersten Übertragungszeit und der zweiten Übertragungszeit in einem Stapelübertragungszeitbericht (710), wobei die erste Übertragungszeit und die zweite Übertragungszeit mit einer ersten TEG-ID bzw. einer zweiten TEG-ID assoziiert sind;
wobei Gleichheit der ersten TEG-ID und der zweiten TEG-ID anzeigt, dass die Differenz zwischen dem ersten Zeitfehler der ersten Übertragungszeit und dem zweiten Zeitfehler der zweiten Übertragungszeit kleiner als der Schwellenwert ist:
nur innerhalb desselben Teilberichts des Stapelübertragungszeitberichts (710),
über alle Teilberichte des Stapelübertragungszeitberichts (710) hinweg oder über mehrere Stapelübertragungszeitberichte (710, 730) hinweg, einschließlich des Stapelübertragungszeitberichts (710).

13. Kommunikationsverfahren, durchgeführt von einem Standortserver (230), das Folgendes beinhaltet:
Empfangen, von einem Netzwerkknoten (102), eines ersten Positionsmesswerts (720) einer ersten Referenzsignalressource und eines zweiten Positionsmesswerts einer zweiten Referenzsignalressource in einem Stapelmessbericht (710), wobei der erste Positionsmesswert (720) und der zweite Positionsmesswert mit derselben Zeitfehlergruppenkennung, TEG-ID, assoziiert sind; und
Feststellen, auf der Basis eines oder mehrerer Konsistenzkriterien, ob Gleichheit der TEG-ID des ersten Positionsmesswerts (720) und des zweiten Positionsmesswerts anzeigt, dass eine Differenz zwischen einem ersten Zeitfehler des ersten Positionsmesswerts (720) und einem zweiten Zeitfehler des zweiten Positionsmesswerts kleiner als ein Schwellenwert ist;
wobei eine Assoziation des ersten Positionsmesswerts (720) und des zweiten Positionsmesswerts mit derselben TEG-ID anzeigt, dass die Differenz zwischen dem ersten Zeitfehler des ersten Positionsmesswerts (720) und dem zweiten Zeitfehler des zweiten Positionsmesswerts kleiner als der Schwellenwert ist:
nur innerhalb desselben Teilberichts des Stapelmessberichts (710),
über alle Teilberichte des Stapelmessberichts (710) hinweg oder
über mehrere Stapelmessberichte (710, 730) hinweg, einschließlich des Stapelmessberichts (710).

14. Kommunikationsverfahren, durchgeführt von einem Standortserver (230), das Folgendes beinhaltet:
Empfangen, von einem Netzwerkknoten (102), einer ersten Übertragungszeit einer ersten Referenzsignalressource und einer zweiten Übertragungszeit einer zweiten Referenzsignalressource in einem Stapelübertragungszeitbericht (710), wobei die erste Übertragungszeit und die zweite Übertragungszeit mit derselben Zeitfehlergruppenkennung, TEG-ID, assoziiert sind; und
Feststellen, auf der Basis eines oder mehrerer Konsistenzkriterien, ob Gleichheit der TEG-ID der ersten Übertragungszeit und der zweiten Übertragungszeit anzeigt, dass eine Differenz zwischen dem ersten Zeitfehler der ersten Übertragungszeit und dem zweiten Zeitfehler der zweiten Übertragungszeit kleiner als ein Schwellenwert ist;
wobei Gleichheit der TEG-ID der ersten Übertragungszeit und der zweiten Übertragungszeit anzeigt, dass die Differenz zwischen dem ersten Zeitfehler der ersten Übertragungszeit und dem zweiten Zeitfehler der zweiten Übertragungszeit kleiner als der Schwellenwert ist:
nur innerhalb desselben Teilberichts des Stapelübertragungszeitberichts (710),
über alle Teilberichte des Stapelübertragungszeitberichts (710) hinweg oder über mehrere Stapelübertragungszeitberichte (710, 730) hinweg, einschließlich des Stapelübertragungszeitberichts (710).

15. Computerprogramm mit Befehlen, die bei Ausführung des Programms durch ein Rechengerät das Rechengerät zum Durchführen des Verfahrens nach einem der Ansprüche 1 bis 14 veranlassen.

## Revendications

1. Procédé de positionnement sans fil réalisé par un nœud de réseau (102), comprenant :
la réalisation d'une première mesure (720) d'une première ressource de signal de référence ;
la réalisation d'une seconde mesure d'une seconde ressource de signal de référence ;
la détermination, sur la base d'un ou plusieurs critères de cohérence, qu'une association de la première mesure (720) et de la seconde mesure à un même identifiant de groupe d'erreurs de synchronisation, TEG-ID, indique qu'une différence entre une première erreur de synchronisation de la première mesure (720) et une seconde erreur de synchronisation de la deuxième mesure est inférieure ou non à un seuil ;
la déclaration, au moins sur la base de la détermination, de la première mesure (720) et de la seconde mesure dans un rapport de mesure par lots (710), de la première mesure (720) et de la seconde mesure associées respectivement à un premier TEG-ID et à un second TEG-ID ;
dans lequel le fait que le premier TEG-ID et le second TEG-ID sont le même TEG-ID indique que la différence entre la première erreur de synchronisation de la première mesure (720) et la seconde erreur de synchronisation de la seconde mesure est inférieure au seuil :
uniquement dans le même sous-rapport du rapport de mesure par lots (710),
dans tous les sous-rapports du rapport de mesure par lots (710), ou
dans de multiples rapports de mesure par lots (710, 730), dont le rapport de mesure par lots (710).

2. Procédé selon la revendication 1, dans lequel les un ou plusieurs critères de cohérence stipulent que le premier TEG-ID et le second TEG-ID se trouvent ou non dans un même sous-rapport du rapport de mesure par lots.

3. Procédé selon la revendication 1, dans lequel les un ou plusieurs critères de cohérence stipulent que le premier TEG-ID et le second TEG-ID sont rapportés ou non dans le même rapport de mesure par lots.

4. Procédé selon la revendication 1, dans lequel les un ou plusieurs critères de cohérence stipulent que la première ressource de signal de référence et la seconde ressource de signal de référence se trouvent ou non sur la même porteuse constituante, la même bande de fréquence, la même couche de fréquence de positionnement, le même numéro absolu de canal de radiofréquence, ARFCN ou la même gamme de fréquences.

5. Procédé selon la revendication 1, dans lequel les un ou plusieurs critères de cohérence stipulent que le nœud de réseau se trouve dans un état CONNECTÉ de commande de ressource radio, RRC, ou ne change pas d'état RRC entre la première mesure et la seconde mesure.

6. Procédé selon la revendication 1, dans lequel les un ou plusieurs critères de cohérence stipulent que le nœud de réseau n'entre pas dans un temps inactif de mode de réception discontinue, DRX, entre la première mesure et la seconde mesure.

7. Procédé selon la revendication 1, dans lequel les un ou plusieurs critères de cohérence stipulent que le nœud de réseau ne modifie pas sa partie de bande passante active, BWP, entre la première mesure et la seconde mesure.

8. Procédé selon la revendication 1, dans lequel les un ou plusieurs critères de cohérence stipulent que la première mesure et la seconde mesure sont dérivées à l'intérieur du même écart de mesure.

9. Procédé selon la revendication 1, dans lequel les un ou plusieurs critères de cohérence stipulent que le nœud de réseau effectue une commutation d'antenne entre la première mesure et la seconde mesure.

10. Procédé selon la revendication 1, comprenant en outre :
la réception d'une configuration d'une fenêtre de mesure dans le domaine temporel durant laquelle mesurer des signaux de référence de positionnement ; et
sur la base d'un nombre de signaux de référence de positionnement dans la fenêtre de mesure dans le domaine temporel inférieur à un seuil, la priorisation de mesures de signaux de référence de positionnement émis au cours d'une première période de temps seuil avant la fenêtre de mesure dans le domaine temporel ou émis au cours d'une seconde période de temps seuil après la fenêtre de mesure dans le domaine temporel,
dans lequel la première ressource de signal de référence, la seconde ressource de signal de référence, ou les deux, sont mesurées au cours de la première période de temps seuil avant la fenêtre de mesure dans le domaine temporel ou au cours de la seconde période de temps seuil après la fenêtre de mesure dans le domaine temporel ; et éventuellement comprenant en outre :
la réception d'une configuration de la première période de temps seuil et de la deuxième période de temps seuil.

11. Procédé selon la revendication 1, comprenant en outre :
la transmission d'une indication que des informations de TEG associées au premier TEG-ID ont changé ;
la transmission d'un intervalle de temps durant lequel des informations de TEG associées au premier TEG-ID sont valides ; ou
toute combinaison de celles-ci ; et éventuellement
dans lequel les informations de TEG comprennent le premier TEG-ID, une valeur d'incertitude et la différence entre la première erreur de synchronisation et la seconde erreur de synchronisation.

12. Procédé de positionnement sans fil réalisé par un nœud de réseau (104), comprenant :
la transmission d'une première ressource de signal de référence à un premier temps de transmission ;
la transmission d'une seconde ressource de signal de référence à un second temps de transmission ;
la détermination, sur la base d'un ou plusieurs critères de cohérence, qu'une association du premier temps de transmission et du second temps de transmission à un même identifiant de groupe d'erreurs de synchronisation, TEG-ID, indique qu'une différence entre une première erreur de synchronisation du premier temps de transmission et une seconde erreur de synchronisation du second temps de transmission est inférieure ou non à un seuil ; et
la déclaration, au moins sur la base de la détermination, du premier temps de transmission et du second temps de transmission dans un rapport de temps de transmission par lots (710), du premier temps de transmission et du second temps de transmission associés à un premier TEG-ID et à un second TEG-ID, respectivement ;
dans lequel le fait que le premier TEG-ID et le second TEG-ID sont le même TEG-ID indique que la différence entre la première erreur de synchronisation du premier temps de transmission et la seconde erreur de synchronisation du second temps de transmission est inférieure au seuil :
uniquement dans le même sous-rapport du rapport de temps de transmission par lots (710),
dans tous les sous-rapports du rapport de temps de transmission par lots (710), ou
dans de multiples rapports de temps de transmission par lots (710, 730), dont le rapport de temps de transmission par lots (710).

13. Procédé de communication réalisé par un serveur de localisation (230), comprenant :
la réception, à partir d'un nœud de réseau (102), d'une première mesure de positionnement (720) d'une première ressource de signal de référence et d'une seconde mesure de positionnement d'une seconde ressource de signal de référence dans un rapport de mesure par lots (710), la première mesure de positionnement (720) et la seconde mesure de positionnement étant associées au même identifiant de groupe d'erreurs de synchronisation, TEG-ID ; et
la détermination, sur la base d'un ou plusieurs critères de cohérence, que la première mesure de positionnement (720) et la seconde mesure de positionnement ayant le même TEG-ID indiquent qu'une différence entre une première erreur de synchronisation de la première mesure de positionnement (720) et une seconde erreur de synchronisation de la seconde mesure de positionnement est inférieure ou non à un seuil ;
dans lequel le fait que la première mesure de positionnement (720) et la seconde mesure de positionnement sont associées au même TEG-ID indique que la différence entre la première erreur de synchronisation de la première mesure de positionnement (720) et la seconde erreur de synchronisation de la seconde mesure de positionnement est inférieure au seuil :
uniquement dans le même sous-rapport du rapport de mesure par lots (710),
dans tous les sous-rapports du rapport de mesure par lots (710), ou
dans de multiples rapports de mesure par lots (710, 730), dont le rapport de mesure par lots (710).

14. Procédé de communication réalisé par un serveur de localisation (230), comprenant :
la réception, à partir d'un nœud de réseau (102), d'un premier temps de transmission d'une première ressource de signal de référence et d'un second temps de transmission d'une seconde ressource de signal de référence dans un rapport de temps de transmission par lots (710), le premier temps de transmission et le second temps de transmission étant associés au même identifiant de groupe d'erreurs de synchronisation, TEG-ID ; et
la détermination, sur la base d'un ou plusieurs critères de cohérence, que le fait que le premier temps de transmission et le second temps de transmission ait le même TEG-ID indique qu'une différence entre une première erreur de synchronisation du premier temps de transmission et une seconde erreur de synchronisation du second temps de transmission est inférieure ou non à un seuil ;
dans lequel le fait que le premier temps de transmission et le second temps de transmission ont le même TEG-ID indique que la différence entre la première erreur de synchronisation de la première transmission et la seconde erreur de synchronisation de la seconde transmission est inférieure au seuil :
uniquement dans le même sous-rapport du rapport de temps de transmission par lots (710),
dans tous les sous-rapports du rapport de temps de transmission par lots (710), ou
dans de multiples rapports de temps de transmission par lots (710, 730), dont le rapport de temps de transmission par lots (710).

15. Programme d'ordinateur comprenant des instructions qui, à leur exécution par un dispositif informatique, amènent le dispositif informatique à entreprendre le procédé selon l'une quelconque des revendications 1 à 14.
